# EUROPÄISCHE PATENTANMELDUNG

(11) **EP 3 403 477 A1**
(43) Veröffentlichungstag der Anmeldung: **21.11.2018**
(21) Anmeldenummer: 18172501.1
(22) Anmeldetag: 15.05.2018
(51) Int. Cl.: A01B 59/06, A01B 63/02, A01B 69/00, A01M 7/00, A01B 59/043, A01B 63/00, A01B 63/16

(54) **ANBAUVORRICHTUNG ZUR KOPPLUNG EINES LANDWIRTSCHAFTLICHEN ARBEITSGERÄTES AN EIN ZUGFAHRZEUG**

(30) Priorität: 16.05.2017 DE 102017110653
(71) Anmelder: Wagner, Jürgen, 67159 Friedelsheim (DE)
(72) Erfinder: Wagner, Jürgen, 67159 Friedelsheim (DE)
(74) Vertreter: Stein, Erik

(57) **Zusammenfassung**

Die Erfindung betrifft eine Anbauvorrichtung zur Kopplung eines landwirtschaftlichen Arbeitsgerätes (4) an ein Zugfahrzeug (1), das über einen Dreipunkt-Kraftheber mit einem Oberlenker (3) und zwei Unterlenkern (2) verfügt, umfassend einen Tragrahmen (9) mit Befestigungselementen (10, 11) zur Kopplung an den Oberlenker und die Unterlenker, einen Anbaurahmen (13) mit Befestigungselementen (14) zur Kopplung an das Arbeitsgerät, sowie einen zwischen dem Tragrahmen und dem Anbaurahmen angeordneten Zwischenrahmen (12), der mittels einer Dreheinrichtung (16) relativ zum Tragrahmen um die Längsachse (17) der Anbauvorrichtung verdrehbar ist und eine Verschiebevorrichtung aufweist, mittels derer der Anbaurahmen quer zur Längsachse relativ zum Zwischenrahmen verschiebbar ist. Die Befestigungselemente des Tragrahmens und/oder die Befestigungselemente des Anbaurahmens sind mittels ihnen zugeordneter Aktoren in ihrer Länge relativ zum Zugfahrzeug und/oder relativ zum Arbeitsgerät verstellbar. Die Verschiebevorrichtung weist mindestens zwei in Form eines Parallelogramms drehbeweglich sowohl am Zwischenrahmen als auch am Anbaurahmen befestigte Streben auf, oder der Tragrahmen, der Zwischenrahmen und der Anbaurahmen sind im Wesentlichen parallel zueinander angeordnet und weisen Eingriffselemente zur relativen Verschiebung auf. Mindestens zwei Einrichtungen (19) zur Positionsbestimmung sind in Richtung der Längsachse (17) hintereinander in definierter Position an der Anbauvorrichtung und/oder dem Arbeitsgerät angebracht. Weiterhin betrifft die Erfindung eine Steuerungseinrichtung und Steuerungsverfahren für die Anbauvorrichtung.

## Beschreibung

Die Erfindung betrifft eine Anbauvorrichtung zur Kopplung eines landwirtschaftlichen Arbeitsgerätes an ein Zugfahrzeug, das über einen Dreipunkt-Kraftheber mit einem Oberlenker und zwei Unterlenkern verfügt, umfassend einen Tragrahmen mit Befestigungselementen zur Kopplung an den Oberlenker und die Unterlenker, einen Anbaurahmen mit Befestigungselementen zur Kopplung an das Arbeitsgerät, sowie einen zwischen dem Tragrahmen und dem Anbaurahmen angeordneten Zwischenrahmen, der mittels einer Dreheinrichtung relativ zum Tragrahmen um die Längsachse der Anbauvorrichtung verdrehbar ist und eine Verschiebevorrichtung aufweist, mittels derer der Anbaurahmen quer zur Längsachse relativ zum Zwischenrahmen verschiebbar ist.

Ein Dreipunkt-Kraftheber, auch Dreipunkt-Kraftheber-Hydraulik oder Dreipunkthydraulik genannt, ist eine hydraulische Vorrichtung an einem Zugfahrzeug, insbesondere einem Traktor, um Arbeitsgeräte, die auch als Anbaugeräte bezeichnet werden, anzukuppeln und gegenüber dem Untergrund anzuheben. Unterseitig sind am Heck des Zugfahrzeugs zwei sich v-förmig in Längsrichtung, also im Wesentlichen in Fahrtrichtung, erstreckende Hebel befestigt, die als Unterlenker bezeichnet werden. An ihren freien Enden weisen die Unterlenker Vorrichtungen zur Befestigung des Arbeitsgerätes auf, die die beiden unteren Punkte der Dreipunktaufhängung bilden. Die Unterlenker können mittels Hydraulikzylindern direkt oder über ein Hebelsystem indirekt verstellt werden. Oberhalb der Unterlenker ist in etwa mittig zwischen den beiden Unterlenkern ein weiterer Hebel am Zugfahrzeug befestigt, der als Oberlenker bezeichnet wird. An seinem freien Ende weist der Oberlenker eine Vorrichtung zur Befestigung des Arbeitsgerätes auf, die den oberen, dritten Punkt der Dreipunktaufhängung bildet. Der Oberlenker ist häufig als Gewindespindel oder doppelt wirkender Hydraulikzylinder ausgeführt. Durch eine Verstellung des Oberlenkers und der Unterlenker in vertikaler Richtung kann das Arbeitsgerät gegenüber dem Untergrund angehoben oder abgesenkt werden. Durch eine Verstellung des Oberlenkers relativ zu den Unterlenkern kann das Arbeitsgerät zusätzlich in seiner Neigung gegenüber dem Untergrund in Längsrichtung des Zugfahrzeugs verstellt werden.

Unter dem Begriff "Längsrichtung" oder "Längsachse" wird hier und im Folgenden die Richtung verstanden, der das Arbeitsgerät bei Geradeausfahrt des Zugfahrzeugs in der Ebene, also ohne Neigung oder Bodenunebenheiten, folgt.

Um ein Arbeitsgerät auch quer zur Längsachse zu verstellen, ist es bekannt, die Unterlenker mittels mindestens eines seitlich angeordneten Hydraulikzylinders in ihrer Lage relativ zur Längsachse zu verschwenken. Beispiele hierfür finden sich unter anderem in den Offenlegungsschriften DE 10 2015 009 889 A1, DE 43 01 029 A1 sowie FR 2 982 455 A1.

In der Praxis stellt sich heraus, dass beim Fahren an einem Hang in einer Richtung quer zum Gefälle das an dem Zugfahrzeug festgelegte Arbeitsgerät einen Versatz zur Fahrtrichtung des Zugfahrzeugs aufweist und eine fluchtende Ausrichtung der Mittelachse des Arbeitsgerätes zur Fahrtrichtung nicht gegeben ist, da das Zugfahrzeug leicht driftet und eine hangaufwärtsgerichtete Ausrichtung einnimmt, die zur Fahrtrichtung winkelversetzt ist. Aber auch auf einem nahezu ebenen Feld kann es aufgrund von Bodenunebenheiten dazu kommen, dass ein Einlenken des Zugfahrzeugs erforderlich wird, was ein Verschwenken des Arbeitsgerätes weg von der Soll-Linie zur Folge hat. Bei einigen Arbeitsgeräten ist ein derartiges Abweichen von der Soll-Linie für die Funktionalität unkritisch, beispielsweise bei Heuwendern. Bei Arbeitsgeräten jedoch, bei denen es auf eine exakte Linienführung ankommt, stellt dies ein schwerwiegendes Problem dar. Beispiele solcher Arbeitsgeräte sind Setz- und Pflanzmaschinen, die orts- und lagegenau, meist in exakten Geraden und Querlinien Pflanzen, Pfähle oder dergleichen in den Boden bringen sollen. Zur Sicherstellung einer positionsgenauen Bepflanzung oder Ausrichtung von Pfählen in einem Gelände, aber auch zur Ein- bzw. Aufbringung von Saatgut, Düngemitteln oder Pflanzenschutzmitteln an vordefinierten Positionen gilt es, unerwünschte Abweichungen der Ist-Position des Arbeitsgerätes von der Soll-Linie oder von den punktgenauen Sollvorgaben zu vermeiden.

Um diesem Problem zu begegnen und das Arbeitsgerät auf die gewünschte Soll-Position auszurichten, sind verschiedene Ansätze aus dem Stand der Technik bekannt. In der Offenlegungsschrift WO 2016/041547 A1 wird ein Zugfahrzeug mit einem Dreipunkt-Kraftheber beschrieben, dessen Unterlenker in ihrer Länge verstellbar sind, sodass das daran gekoppelte Arbeitsgerät in seiner Position relativ zum Zugfahrzeug verstellt werden kann. Ein anderer Ansatz wird mit dem Gegenstand der Patentanmeldung EP 2 283 719 A2 verfolgt, indem zur Kopplung eines Arbeitsgerätes an ein Zugfahrzeug ein Zwischenrahmen bereitgestellt wird, der als Schieberahmen ausgestaltet ist, sodass das Arbeitsgerät quer zur Längsachse verschoben werden kann.

Die genannten Vorrichtungen zur Korrektur eines Abweichens des Arbeitsgerätes von seiner Soll-Position sind in vielen Fällen ausreichend. Allerdings stoßen diese Lösungsvorschläge auch schnell an ihre Grenzen, wenn beispielsweise das Geländeprofil anspruchsvoller ist oder der zur Verfügung stehende Raum für das Arbeitsgerät begrenzt ist, wie dies unter anderem in Spalieranlagen der Fall ist.

Es stellte sich die Aufgabe, gattungsgemäße Systeme zur Kopplung eines Arbeitsgerätes an ein landwirtschaftliches Zugfahrzeug derart weiterzuentwickeln, dass auch in anspruchsvollem Gelände und in engen Arbeitsräumen eine schnelle, effiziente und zuverlässige Führung des Arbeitsgerätes auf einer vorgegebenen Soll-Position automatisiert sichergestellt ist.

Diese Aufgabe wird erfindungsgemäß gelöst durch eine Anbauvorrichtung gemäß Anspruch 1 oder alternativ gemäß Anspruch 4, eine Steuerungseinrichtung gemäß Anspruch 8 sowie ein Steuerungsverfahren gemäß Anspruch 10.

Vorteilhafte Ausgestaltungen der Anbauvorrichtung, der Steuerungseinrichtung und des Steuerungsverfahrens sind in den jeweils abhängigen Ansprüchen angegeben.

Die erfindungsgemäße Anbauvorrichtung dient der Kopplung eines landwirtschaftlichen Arbeitsgerätes an ein Zugfahrzeug, das über einen Dreipunkt-Kraftheber mit einem Oberlenker und zwei Unterlenkern verfügt. Sie umfasst einen Tragrahmen mit Befestigungselementen zur Kopplung an den Oberlenker und die Unterlenker, einen Anbaurahmen mit Befestigungselementen zur Kopplung an das Arbeitsgerät, sowie einen zwischen dem Tragrahmen und dem Anbaurahmen angeordneten Zwischenrahmen. Der Zwischenrahmen ist mittels einer Dreheinrichtung relativ zum Tragrahmen um die Längsachse der Anbauvorrichtung verdrehbar und weist eine Verschiebevorrichtung auf, mittels derer der Anbaurahmen quer zur Längsachse relativ zum Zwischenrahmen verschiebbar ist. Die Befestigungselemente des Tragrahmens und/oder die Befestigungselemente des Anbaurahmens sind mittels ihnen zugeordneter Aktoren in ihrer Länge relativ zum Zugfahrzeug und/oder relativ zum Arbeitsgerät verstellbar. In einer ersten erfindungsgemäßen Ausführungsform weist die Verschiebevorrichtung mindestens zwei in Form eines Parallelogramms drehbeweglich sowohl am Zwischenrahmen als auch am Anbaurahmen befestigte Streben auf. An der Anbauvorrichtung und/oder dem Arbeitsgerät sind mindestens zwei Einrichtungen zur Positionsbestimmung in Richtung der Längsachse hintereinander in definierter Position angebracht, wobei mindestens eine der Einrichtungen zur Positionsbestimmung am Anbaurahmen und/oder dem Arbeitsgerät angebracht ist.

Unter dem Begriff "Zugfahrzeug" werden erfindungsgemäß landwirtschaftliche Fahrzeuge verstanden, die über einen Dreipunkt-Kraftheber mit einem Oberlenker und zwei Unterlenkern verfügen. Diese werden auch als Zugmaschine, Traktor oder Schlepper bezeichnet. Der Dreipunkt-Kraftheber kann am Heck des Fahrzeugs oder an seiner Frontseite oder sowohl am Heck als auch an der Frontseite vorhanden sein. Die erfindungsgemäße Anbauvorrichtung kann sowohl bei der Vorwärtsbewegung als auch bei der Rückwärtsbewegung des Zugfahrzeuges eingesetzt werden, wobei das Zugfahrzeug das über die Anbauvorrichtung angekoppelte Arbeitsgerät ziehen oder schieben kann. Es können auch gleichzeitig zwei Arbeitsgeräte über zwei Anbauvorrichtungen am Heck und an der Frontseite des Zugfahrzeuges angekoppelt werden. Typische Einsatzgebiete derartiger Zugfahrzeuge umfassen beispielsweise Landwirtschaft, Forstwirtschaft, Garten- und Landschaftsbau, Weinbau und Obstanbau, aber auch allgemeine Erdarbeiten, Straßenbau und Transporte.

Bei dem landwirtschaftlichen Arbeitsgerät kann es sich beispielsweise um ein Gerät zur Bodenvorbereitung wie Pflügen oder Hacken, um eine Erntemaschine, eine Setz- oder Pflanzmaschinen oder um ein Gerät zur Einbringung bzw. Aufbringung von Saatgut, Düngemitteln oder Pflanzenschutzmitteln handeln.

Der Tragrahmen weist Befestigungselemente zur Kopplung an den Oberlenker und die Unterlenker auf, und der Anbaurahmen weist Befestigungselemente zur Kopplung an das Arbeitsgerät auf. Diese Befestigungselemente dienen zunächst dazu, den Tragrahmen an das Zugfahrzeug und den Anbaurahmen an das Arbeitsgerät zu koppeln. Darüber hinaus dienen die Befestigungselemente dazu, das Arbeitsgerät in seiner Ausrichtung zum Zugfahrzeug relativ zu diesem zu verstellen. Dazu können die Befestigungselemente des Tragrahmens mittels ihnen zugeordneter Aktoren in ihrer Länge relativ zum Zugfahrzeug verstellbar ausgestaltet sein. Weiterhin können die Befestigungselemente des Anbaurahmens mittels ihnen zugeordneter Aktoren in ihrer Länge relativ zum Arbeitsgerät verstellbar ausgestaltet sein. Es können auch sowohl einzelne oder alle Befestigungselemente des Tragrahmens als auch einzelne oder alle Befestigungselemente des Anbaurahmens in ihrer Länge verstellbar ausgestaltet sein.

Als Aktoren sind sämtliche Vorrichtungen geeignet, die Signale einer Steuerungseinrichtung in eine Bewegung umzusetzen, beispielsweise hydraulische, pneumatische oder elektromechanische Antriebe. In ihrer Länge verstellbare Befestigungselemente und ihnen zugeordnete Aktoren können auch in einem Bauteil integriert sein, beispielsweise in Form von einfach oder doppelt wirkenden Hydraulik- oder Pneumatikzylindern.

In einer vorteilhaften Ausgestaltung sind die Befestigungselemente als sogenannte "Schiebetaschen" ausgebildet, bei denen ein erstes Element in einem zweiten Element in Längsrichtung relativ zueinander verschiebbar gelagert ist. Dabei kann es sich beispielsweise um einfach gegenläufige oder doppelt wirkende Hydraulikzylinder oder Pneumatikzylinder oder um einen elektromechanischen Antrieb handeln. Die Schiebetaschen sind einfach zu fertigen und robust in der Anwendung.

Nicht verstellbare Befestigungselemente für den Tragrahmen oder den Anbaurahmen sind aus dem Stand der Technik bekannt, beispielsweise als Steckverbindungen, Schraubverbindungen, Fanghaken oder Kupplungen.

Die Anzahl der Befestigungselemente kann entsprechend den Gegebenheiten des Zugfahrzeuges und des Arbeitsgerätes angepasst werden. Üblicherweise sind an einem Zugfahrzeug ein Oberlenker und zwei Unterlenker vorhanden. Entsprechend werden für diesen Fall mindestens drei Befestigungselemente am Tragrahmen der Anbauvorrichtung vorgesehen. Sollte das Zugfahrzeug mehr als drei Ankopplungspunkte aufweisen, können selbstverständlich am Tragrahmen der Anbauvorrichtung mehr als drei Befestigungselemente vorgesehen werden. Gleiches gilt analog für die Anpassung der Anzahl und Art der Befestigungselemente des Anbaurahmens zur Kopplung mit dem Arbeitsgerät.

Vorzugsweise erfolgt die Kopplung der Befestigungselemente des Tragrahmens an den Oberlenker und die Unterlenker unmittelbar, die Befestigungselemente werden also direkt an Ober- und Unterlenker befestigt. Die Kopplung kann aber auch indirekt erfolgen, beispielsweise dadurch, dass an dem Oberlenker und den Unterlenkern ein erstes Bauteil, z.B. ein Rahmen oder eine Platte, unmittelbar befestigt ist, und die Befestigungselemente des Tragrahmens längenverstellbar mit dem ersten Bauteil verbunden sind.

Zwischen dem Tragrahmen und dem Anbaurahmen ist ein Zwischenrahmen angeordnet, der mittels einer Dreheinrichtung relativ zum Tragrahmen um die Längsachse der Anbauvorrichtung verdrehbar ist. Die Dreheinrichtung kann beispielsweise als Welle ausgestaltet sein.

Der Dreheinrichtung ist mindestens ein Aktor zugeordnet, mittels dessen die Dreheinrichtung beeinflusst werden kann. Der Aktor kann beispielsweise Hydraulikzylinder, Pneumatikzylinder oder elektromechanische Komponenten umfassen.

Über die Dreheinrichtung kann das angekoppelte Arbeitsgerät in seiner seitlichen Ausrichtung individuell den jeweiligen Anforderungen angepasst werden, beispielsweise mit einem vorgegebenen Abstand zur Oberfläche des zu bearbeitenden Bodens oder waagerecht bezüglich der Lotrechten.

Der Zwischenrahmen weist eine Verschiebevorrichtung auf, mittels derer der Anbaurahmen quer zur Längsachse relativ zum Zwischenrahmen verschiebbar ist. Je nach Ausführung der Verschiebevorrichtung kommen unterschiedliche Aktoren in Betracht, beispielsweise Hydraulikzylinder, Pneumatikzylinder oder elektromechanische Komponenten.

In einer ersten Ausführungsform der erfindungsgemäßen Anbauvorrichtung umfasst die Verschiebevorrichtung mindestens zwei in Form eines Parallelogramms drehbeweglich sowohl am Zwischenrahmen als auch am Anbaurahmen befestigte Streben. Mindestens ein Aktor ist einer der Streben zugeordnet oder zwischen dem Zwischenrahmen und dem Anbaurahmen angebracht und derart ausgestaltet, dass durch den mindestens einen Aktor der Anbaurahmen quer zur Längsachse relativ zum Zwischenrahmen verschiebbar ist.

In einer bevorzugten Ausgestaltung dieser ersten Ausführungsform ist mindestens ein Aktor drehbeweglich an einer Strebe und an dem Zwischenrahmen oder an einer Strebe und an dem Anbaurahmen befestigt. Der Aktor ist vorzugsweise als doppelt wirkender Hydraulikzylinder oder als doppelt wirkender elektromechanischer Antrieb ausgestaltet.

In einer Variante dieser bevorzugten Ausgestaltung ist ein erster Aktor drehbeweglich an einer ersten Strebe und an dem Zwischenrahmen oder an einer ersten Strebe und an dem Anbaurahmen befestigt, und ein zweiter Aktor ist drehbeweglich an einer zweiten Strebe und an dem Zwischenrahmen oder an einer zweiten Strebe und an dem Anbaurahmen befestigt. Die Aktoren sind vorzugsweise als einfach wirkende Hydraulikzylinder oder als einfach wirkende elektromechanische Antriebe ausgestaltet. Vorzugsweise wird bei dieser Variante entweder der erste Aktor oder der zweite Aktor betätigt, während der jeweils andere Aktor passiv ist. Wenn es sich bei den Aktoren um Hydraulikzylinder handelt, sind diese derart gestaltet, dass bei dem jeweils passiven Aktor gewährleistet ist, dass das Hydrauliköl aus dem Zylinder ausfließen kann, um bei einer späteren Aktivierung wieder in den Zylinder gepresst werden zu können.

In einer weiterhin bevorzugten Ausgestaltung sind die Aktoren hinsichtlich ihrer Kraftwirkung einstellbar ausgeführt. Bei Hydraulikzylindern kann dies dadurch realisiert werden, dass eine Ventilsteuerung einen höheren oder niedrigeren Öldruck auf die Zylinder zulässt. Durch diese Einstellbarkeit wird erreicht, dass die Reaktion der Aktoren auf Steuerungsbefehle zur Korrektur von Abweichungen je nach Anforderung variiert werden kann. So wird beispielsweise in einem weichen Boden weniger Kraft benötigt, um ein in den Boden eingreifendes Arbeitsgerät seitlich zu verschieben als in einem harten Boden. Das Einstellen kann manuell oder automatisiert erfolgen, z.B. im Rahmen der Steuerungseinrichtung der Anbauvorrichtung oder unabhängig davon, z.B. von der Kabine des Zugfahrzeuges aus.

Die Verschiebevorrichtung in Form eines Parallelogramms hat mehrere Vorteile. Sie ist bauartbedingt einfach und kostengünstig zu fertigen und leicht an unterschiedliche Anforderungen anpassbar, z.B. bezüglich anzukoppelnder Lasten und Verschiebewege. Weiterhin weist sie im Unterschied zu aus dem Stand der Technik bekannten Verschiebevorrichtungen weniger Verschleißteile auf, sodass sie in der Anwendung robust und verschleißarm ist. Wie nachfolgend noch beschrieben wird, lassen sich mit nur wenigen Bauteilen stabile Verschiebevorrichtungen herstellen, sodass die gesamte Anbauvorrichtung gewichtsparend, flach und kompakt gebaut werden kann. Das ermöglicht es beispielsweise, schwere Aggregate, die zur Ankopplung an das Zugfahrzeug benötigt werden, oder Einrichtungen wie Öltanks für Hydraulikzylinder oder Kästen, in denen Elektronikbauteile untergebracht sind, nahezu an beliebiger Stelle der Anbauvorrichtung zu platzieren.

Zwischenrahmen und Anbaurahmen können auf unterschiedliche Weise gestaltet sein, wodurch auch den aufzunehmenden Lasten in Form des Arbeitsgerätes Rechnung getragen werden kann. In einer bevorzugten Ausführungsform umfassen der Zwischenrahmen und der Anbaurahmen jeweils einen Querholm, der jeweils insbesondere als Vierkantrohr ausgestaltet ist. Die mindestens beiden Streben sind vorzugsweise als jeweils zwei parallele Flacheisen ausgeführt, von denen eines an der Oberseite der Querholme und eines an der Unterseite der Querholme drehbeweglich befestigt ist. Der Begriff "Flacheisen" ist dabei nicht einschränkend auf das Material Eisen zu verstehen, sondern bezeichnet die Bauart des Verbindungselements. Alternativ zu den Flacheisen können auch Metallarme oder Bleche als Streben eingesetzt werden. Die Streben können flach oder profiliert sein, beispielsweise als L-Profil, T-Profil, H-Profil oder als Vierkantrohr, womit sich die Steifigkeit der Streben beeinflussen lässt. Die Ausführung im Hinblick auf Gestaltungsmerkmale wie Materialauswahl, Materialstärke, Länge und Breite wird sowohl bei den Rahmen als auch bei den Streben an die konkreten Anforderungen angepasst, unter anderem bezüglich des Arbeitsgerätes.

Besonders bevorzugt ist eine Weiterbildung dieser Ausführungsform, bei der der Zwischenrahmen und der Anbaurahmen jeweils einen zweiten Querholm umfassen, der insbesondere ebenfalls jeweils als Vierkantrohr ausgestaltet ist, und der in vertikaler Richtung über dem ersten Querholm angeordnet und fest mit diesem verbunden ist. Bei dieser Weiterbildung sind mindestens zwei weitere Streben als jeweils zwei parallele Flacheisen ausgeführt, von denen eines an der Oberseite der zweiten Querholme und eines an der Unterseite der zweiten Querholme drehbeweglich befestigt ist. Auch bei dieser Weiterbildung können alternativ zu den Flacheisen Metallarme oder Bleche in verschiedener Bauart als Streben eingesetzt werden. Dieses doppelte Parallelogramm hat den Vorteil, dass eine Seitenverschiebung auch für schwere Arbeitsgeräte einfach und robust gewährleistet werden kann.

In einer weiteren erfindungsgemäßen Ausgestaltung sind die Querholme des Zwischenrahmens und des Anbaurahmens in vertikaler Richtung übereinander angeordnet und die die Querholme verbindenden Streben derart gestaltet, dass bei einem Vollausschlag der Verschiebung nach rechts oder links die beiden Querholme übereinander zu liegen kommen. Dadurch lässt sich die Längsausdehnung der Anbauvorrichtung minimieren.

In einer weiteren erfindungsgemäßen Ausgestaltung sind die Streben längenverstellbar ausgeführt, sodass sie manuell auf eine vorgegebene Länge eingestellt werden können, zum Beispiel durch Steck- oder Schraubverbindungen. Dies hat den Vorteil, dass dieselbe Anbauvorrichtung an unterschiedliche Anbaugeräte angepasst werden kann, was die seitliche Auslenkung der Verschiebevorrichtung und die Ausdehnung der Anbauvorrichtung in Längsrichtung angeht.

In einer zweiten, alternativen Ausführungsform der erfindungsgemäßen Anbauvorrichtung sind der Tragrahmen, der Zwischenrahmen und der Anbaurahmen im Wesentlichen parallel zueinander angeordnet. "Im Wesentlichen" bedeutet in diesem Zusammenhang, dass die Hauptausrichtungen der drei Rahmen übereinstimmen. Einzelne Anbauteile, die nicht zum jeweiligen Rahmen an sich gehören, werden dabei nicht berücksichtigt. Die Verschiebevorrichtung umfasst erste Eingriffselemente, die am Zwischenrahmen befestigt sind. In den ersten Eingriffselementen sind zweite Eingriffselemente verschiebbar geführt, die am Anbaurahmen befestigt sind. Vorzugsweise sind die ersten Eingriffselemente und die zweiten Eingriffselemente derart gestaltet und aufeinander abgestimmt, dass eine parallele Führung des Anbaurahmens zum Zwischenrahmen erreicht werden kann. Bevorzugt sind die ersten und zweiten Eingriffselemente als Führungsschienen und/oder Winkelprofile ausgeführt.

Erfindungsgemäß sind - sowohl bei der ersten als auch bei der zweiten Ausführungsform - an der Anbauvorrichtung und/oder am Arbeitsgerät mindestens zwei Einrichtungen zur Positionsbestimmung angebracht. Der Begriff "Position" meint die geografische bzw. kartografische Position in mindestens zwei Dimensionen (Länge und Breite), vorzugsweise in drei Dimensionen (Länge, Breite und Höhe). Die Einrichtungen zur Positionsbestimmung sind in Richtung der Längsachse hintereinander in definierter Position angebracht, wobei mindestens eine der Einrichtungen zur Positionsbestimmung am Anbaurahmen und/oder dem Arbeitsgerät angebracht ist. Unter dem Begriff "definierte Position" wird verstanden, dass im Ausgangszustand des Arbeitsgerätes, also im nicht ausgelenkten Zustand, die Anordnung der mindestens zwei Einrichtungen zur Positionsbestimmung relativ zueinander festgelegt ist, beispielsweise als Vektorinformation. Dadurch sind nicht nur die aktuellen Positionen der beiden Einrichtungen zur Positionsbestimmung ermittelbar, sondern auch definierte Achsen, beispielsweise eine Längsachse und eine Querachse. Bei einer Änderung der Raumkoordinaten der Einrichtungen zur Positionsbestimmung - z.B. durch eine Verdrehung der Anbauvorrichtung um ihre vertikale Achse - lassen sich somit neben den neuen aktuellen Positionen der Einrichtungen zur Positionsbestimmung auch Änderungen der Achsen ermitteln. Die Anordnung "hintereinander in definierter Position" ermöglicht es somit, nicht nur eine Abweichung eines Arbeitspunktes des Arbeitsgerätes von einer Soll-Position, sondern auch eine Abweichung der Ausrichtung des Arbeitsgerätes von einer Soll-Linie festzustellen.

In einer bevorzugten Ausgestaltung sind die mindestens zwei Einrichtungen zur Positionsbestimmung beide am Anbaurahmen und/oder dem Arbeitsgerät angebracht. Dadurch wird sichergestellt, dass sich die relative Lage der mindestens zwei Einrichtungen zur Positionsbestimmung zueinander aufgrund von Verstellungen der Befestigungselemente, der Dreheinrichtung oder der Verschiebevorrichtung nicht verändert. Bei einer Ausführungsform der Anbauvorrichtung, bei der die Befestigungselemente des Anbaurahmens verstellbar sind, sind bei dieser Ausgestaltung die mindestens zwei Einrichtungen zur Positionsbestimmung beide am Anbaurahmen oder dem Arbeitsgerät angebracht.

In einer alternativen bevorzugten Ausgestaltung ist mindestens eine der Einrichtungen zur Positionsbestimmung am Anbaurahmen oder am Arbeitsgerät angebracht, während mindestens eine weitere Einrichtung am Tragrahmen oder am Zwischenrahmen angebracht ist. Bei dieser Ausgestaltung ist es erforderlich, dass ausgehend von einer vordefinierten Ausgangslage, in der die Einrichtungen zur Positionsbestimmung sich in einer festgelegten Position zueinander befinden, sämtliche Verschiebungen der betreffenden Befestigungselemente, Dreheinrichtung oder Verschiebevorrichtung messtechnisch erfasst werden, sodass die relative Lage der Einrichtungen zur Positionsbestimmung zu jedem Zeitpunkt um die Verschiebungen korrigiert berechnet werden kann. Eine solche messtechnisch-rechnerische Korrektur ist auch erforderlich, wenn eine Einrichtung zur Positionsbestimmung auf dem Anbaurahmen angebracht ist, die andere Einrichtung zur Positionsbestimmung auf dem Arbeitsgerät angebracht ist und die Befestigungselemente des Anbaurahmens relativ zum Arbeitsgerät verstellbar sind.

Auf Basis der mit Hilfe der Einrichtungen zur Positionsbestimmung ermittelten Ist-Position und Ist-Ausrichtung des Arbeitsgerätes können die Aktoren der erfindungsgemäßen Anbauvorrichtung derart angesteuert werden, dass das Arbeitsgerät bei einer Abweichung aus seiner Soll-Lage in kürzester Zeit, z.B. in weniger als einer Sekunde, wieder in die vorgesehene Ausrichtung gebracht wird, und zwar sowohl in Richtung der Längsachse als auch quer zur Längsachse und in der horizontalen Ausrichtung.

In einer bevorzugten Ausgestaltung der erfindungsgemäßen Anbauvorrichtung sind die Einrichtungen zur Positionsbestimmung im nicht ausgelenkten Zustand der Anbauvorrichtung parallel zur Längsachse hintereinander angeordnet. Besonders bevorzugt sind die Einrichtungen zur Positionsbestimmung auf der Längsachse hintereinander angeordnet. Diese Ausgestaltung hat den Vorteil, dass sich eine Abweichung der Ist-Lage des Arbeitsgerätes aus seiner Soll-Lage einfacher berechnen lässt.

Weiterhin ist bevorzugt, dass die Einrichtungen zur Positionsbestimmung möglichst nahe an dem Arbeitspunkt des Arbeitsgerätes angebracht sind. Besonders bevorzugt sind beide oder zumindest eine Einrichtung zur Positionsbestimmung in vertikaler Richtung über dem Arbeitspunkt angeordnet.

In einer bevorzugten Ausgestaltung sind die Einrichtungen zur Positionsbestimmung in Längs- und/oder Querrichtung verstellbar an der Anbauvorrichtung und/oder dem Anbaugerät angebracht. Eine derartige Verstellbarkeit kann beispielsweise dadurch erreicht werden, dass die Einrichtungen zur Positionsbestimmung auf einem Tragholm an unterschiedlichen Stellen befestigt werden können, z.B. durch Klemm- oder Schraubverbindungen. Eine derartige Verstellbarkeit hat den Vorteil, dass die Anbauvorrichtung flexibel an unterschiedliche Arbeitsgeräte angepasst und hinsichtlich der Steuerung optimal angepasst werden kann.

Die Einrichtungen zur Positionsbestimmung sind vorzugsweise als Antennen ausgestaltet. Unter dem Begriff "Antenne" wird eine Empfangseinrichtung verstanden, die geeignet ist, Positionsdaten zu empfangen, die von einem Sender, beispielsweise von einem Satelliten oder einem Mobilfunksender, ausgesandt werden. Bevorzugt sind die Einrichtungen zur Positionsbestimmung als Antennen ausgestaltet, die Signale von Satelliten eines Globalen Satellitennavigationssystems (global navigation satellite system, GNSS) empfangen können. Besonders bevorzugt sind die Einrichtungen zur Positionsbestimmung als GPS-Antennen (Global Positioning System) ausgestaltet. Ganz besonders bevorzugt sind die Einrichtungen zur Positionsbestimmung - unabhängig von der Art der empfangbaren Signale - als Doppelantenne oder zwei unmittelbar benachbarte Antennen ausgestaltet.

Vorzugsweise werden bei der Nutzung von GPS-Antennen die Informationen von mindestens fünf, insbesondere mindestens sechs Satelliten verwendet, wodurch eine Genauigkeit von plus/minus zwei Zentimetern erreicht werden kann.

Der Abstand zwischen den mindestens zwei Einrichtungen zur Positionsbestimmung ist vorzugsweise so gewählt, dass sich eine hinreichende Genauigkeit bei der Positionsbestimmung und der relativen Lage der Einrichtungen zueinander bestimmen lässt. Abhängig von der Art und Weise der Positionsbestimmung weisen in einer bevorzugten Ausgestaltung die mindestens zwei Einrichtungen zur Positionsbestimmung einen Mindestabstand von 5 cm, besonders bevorzugt von 10 cm, insbesondere von 20 cm, und einen Maximalabstand von 150 cm, besonders bevorzugt von 100 cm, insbesondere von 50 cm auf. Unter dem Abstand wird dabei die räumlich kürzeste Entfernung zwischen zwei Einrichtungen zur Positionsbestimmung verstanden.

In einer bevorzugten Weiterbildung weist die erfindungsgemäße Anbauvorrichtung mindestens einen Neigungssensor auf, der eingerichtet ist, die Neigung der Anbauvorrichtung und/oder des Arbeitsgerätes gegenüber ihrer bzw. seiner vertikalen Achse zu erfassen. Je nach Anforderung wird ein Neigungssensor gewählt, der eine Information über die Neigung in Längsrichtung, in Querrichtung oder sowohl in Längsrichtung als auch in Querrichtung zur Verfügung stellt. Es können auch mehrere Neigungssensoren vorgesehen sein, die derart eingerichtet sind, dass beispielsweise mindestens ein Neigungssensor eine Information über die Längsneigung und mindestens ein Neigungssensor eine Information über die Querneigung bereitstellt.

Die Neigungssensoren können auf unterschiedlichen Messprinzipien beruhen, die entweder die absolute Neigung gegenüber der Lotrechten oder die relative Neigung gegenüber der Bodenoberfläche bestimmen. Zur Bestimmung der absoluten Neigung kommen beispielsweise Neigungssensoren in Frage, die auf dem Prinzip der Winkelmessung beruhen. Zur Bestimmung der relativen Neigung können darüber hinaus auch Neigungssensoren eingesetzt werden, die den Abstand zwischen dem Sensor und der Bodenoberfläche ermitteln, z.B. auf Basis von optischen oder Infrarot-Verfahren. Je nach geforderter Auflösung, Genauigkeit und Geschwindigkeit der Bestimmung der Neigungsinformation können auch die mindestens zwei Einrichtungen zu Positionsbestimmung als Neigungssensoren eingesetzt werden, z.B. in Ihrer Ausgestaltung als GPS-Antennen. Geeignete Neigungssensoren sind aus dem Stand der Technik bekannt. In einer bevorzugten Ausgestaltung werden Gyroskop-Sensoren als Neigungssensoren eingesetzt.

In einer besonders bevorzugten Ausführungsform befinden sich in Längsrichtung betrachtet mindestens je zwei Neigungssensoren vorne und hinten an der Anbauvorrichtung und/oder dem Arbeitsgerät. Sie sind in Längsrichtung und in Querrichtung jeweils so weit voneinander beabstandet, dass eine schnelle und zuverlässige Ermittlung der Neigung des Arbeitsgerätes und des Abstandes des Arbeitsgerätes von der Bodenoberfläche ermittelt werden kann.

In einer weiteren erfindungsgemäßen Ausgestaltung der Anbauvorrichtung umfasst die Dreheinrichtung eine Welle, über die der Tragrahmen und der Zwischenrahmen miteinander verbunden sind. Ein in seiner Länge verstellbarer Aktor ist mit einem Ende am Tragrahmen und mit seinem anderen Ende in Querrichtung exzentrisch am Zwischenrahmen angebracht. "Exzentrisch" ist dabei zu verstehen als in Längsrichtung betrachtet seitlich neben der Wellenachse. Der Aktor ist vorzugsweise als doppelt wirkender Hydraulikzylinder oder als elektromechanischer Antrieb ausgestaltet.

In einer Weiterbildung der erfindungsgemäßen Anbauvorrichtung sind auf beiden Seiten des Tragrahmens Stützräder an Halterungen befestigt, wobei die Halterungen in seitlicher Richtung, also quer zur Längsachse, in vertikaler Richtung oder sowohl in seitlicher als auch in vertikaler Richtung verstellbar sind.

Bei Ausführungsformen der erfindungsgemäßen Anbauvorrichtung, bei denen die Befestigungselemente des Tragrahmens nicht in ihrer Länge relativ zum Zugfahrzeug verstellbar sind, sind die Stützräder am Tragrahmen manuell oder mittels Hilfsenergie verstellbar in dem Sinne, dass sie vor Inbetriebnahme der Anbauvorrichtung an die jeweilige Situation angepasst werden können. Eine weitergehende Verstellmöglichkeit durch Aktoren im laufenden Betrieb ist bei dieser Variante in aller Regel nicht erforderlich.

Bei Ausführungsformen der erfindungsgemäßen Anbauvorrichtung hingegen, bei denen mindestens ein Befestigungselement des Tragrahmens in seiner Länge relativ zum Zugfahrzeug verstellbar ist, sind die Stützräder vorzugsweise zumindest in vertikaler Richtung durch Aktoren gesteuert verstellbar ausgebildet. Bevorzugt sind sie auch in seitlicher Richtung durch Aktoren gesteuert verstellbar ausgebildet. Besonders bevorzugt ist bei dieser Ausgestaltung die Verstellbarkeit der Stützräder auf die Verstellbarkeit der Befestigungselemente des Tragrahmens abgestimmt oder mit dieser synchronisiert.

In einer alternativen Weiterbildung der erfindungsgemäßen Anbauvorrichtung sind auf beiden Seiten des Zwischenrahmens und/oder des Anbaurahmens Stützräder an Halterungen befestigt, die in seitlicher Richtung, also quer zur Längsachse, in vertikaler Richtung, oder in seitlicher und vertikaler Richtung verstellbar sind. Bevorzugt sind die Halterungen der Stützräder durch Aktoren gesteuert verstellbar.

In einer Variante der erfindungsgemäßen Anbauvorrichtung können die Aktoren am Zwischenrahmen, am Anbaurahmen und/oder den Halterungen auch derart von einer Steuerungseinrichtung angesteuert werden, dass sie die Rolle des Aktors der Dreheinrichtung übernehmen.

Bei den Aktoren zur Verstellung der Halterungen der Stützräder handelt es sich vorzugsweise um Hydraulikzylinder, Pneumatikzylinder oder elektromechanische Antriebe.

Ein weiterer Gegenstand der Erfindung ist eine Steuerungseinrichtung für eine erfindungsgemäße Anbauvorrichtung, die Mittel zur Verarbeitung der von den Einrichtungen zur Positionsbestimmung bereitgestellten Signale in kartografische Ist-Positionsinformationen, eine Speichereinheit zur Speicherung von Soll-Positionsinformationen für den Arbeitspunkt des Arbeitsgerätes, eine Recheneinheit mit einem Steuerungsprogramm zur Berechnung von Steuerungssignalen für die Aktoren der Befestigungselemente des Tragrahmens und/oder des Anbaurahmens, der Verschiebevorrichtung und/oder der Dreheinrichtung oder gegebenenfalls der Halterungen für die Stützräder, sowie eine Ausgabeeinheit für die Steuerungssignale umfasst. Die Recheneinheit ist derart eingerichtet, dass ausgehend von den Ist-Positionsinformationen und den Soll-Positionsinformationen in Abhängigkeit von einem vorgegebenen Steuerungsmodus die Steuerungssignale derart berechnet werden, dass durch Betätigen der Aktoren durch die Steuerungssignale der Arbeitspunkt des Arbeitsgerätes auf die Soll-Position hin bewegt wird.

In einer bevorzugten Ausführungsform der Steuerungseinrichtung, die für eine Anbauvorrichtung geeignet ist, die mindestens einen Neigungssensor aufweist, umfasst die Steuerungseinrichtung weiterhin Mittel zur Verarbeitung der von dem mindestens einen Neigungssensor bereitgestellten Signale in Ist-Neigungsinformationen des Anbaurahmens und/oder des Arbeitsgerätes. Die Recheneinheit ist dabei derart eingerichtet, dass vor oder bei der Berechnung der Steuerungssignale für die Aktoren ausgehend von den Ist-Positionsinformationen unter Berücksichtigung der Ist-Neigungsinformationen der tatsächliche Arbeitspunkt des Arbeitsgerätes berechnet wird.

Ein weiterer Gegenstand der Erfindung ist ein Steuerungsverfahren für eine erfindungsgemäße Anbauvorrichtung, umfassend die Schritte:
- Verarbeitung der von den Einrichtungen zur Positionsbestimmung bereitgestellten Signale in kartografische Ist-Positionsinformationen,
- Berechnung von Steuerungssignalen für die Aktoren der Befestigungselemente des Tragrahmens und/oder des Anbaurahmens, der Verschiebevorrichtung und/oder der Dreheinrichtung oder gegebenenfalls der Halterungen für die Stützräder ausgehend von den Ist-Positionsinformationen und vorgegebenen Soll-Positionsinformationen in Abhängigkeit von einem vorgegebenen Steuerungsmodus, sodass durch Betätigen der Aktoren durch die Steuerungssignale der Arbeitspunkt des Arbeitsgerätes auf die Soll-Position hin bewegt wird, und
- Ausgabe der Steuerungssignale an die Aktoren der Befestigungselemente des Tragrahmens und/oder des Anbaurahmens, der Verschiebevorrichtung und/oder der Dreheinrichtung oder gegebenenfalls der Halterungen für die Stützräder.

In einer bevorzugten Ausführungsform des Steuerungsverfahrens, das für eine Anbauvorrichtung geeignet ist, die mindestens einen Neigungssensor aufweist, werden als weiterer Schritt die von dem mindestens einen Neigungssensor bereitgestellten Signale in Ist-Neigungsinformationen des Anbaurahmens und/oder des Arbeitsgerätes verarbeitet, und gemäß eines ersten Steuerungsmodus wird vor oder bei der Berechnung der Steuerungssignale für die Aktoren ausgehend von den Ist-Positionsinformationen unter Berücksichtigung der Ist-Neigungsinformationen der tatsächliche Arbeitspunkt des Arbeitsgerätes berechnet.

In einer weiteren bevorzugten Ausführungsform des Steuerungsverfahren werden gemäß eines zweiten Steuerungsmodus zur Korrektur der Längsneigung des Arbeitsgerätes die Steuerungssignale für die Aktoren zur Verstellung der Befestigungselemente des Tragrahmens und/oder des Anbaurahmens in ihrer Länge relativ zum Oberlenker und/oder zu den Unterlenkern und/ oder relativ zum Arbeitsgerät ausgehend von den Ist-Neigungsinformationen sowie vorgegebenen Soll-Neigungsinformationen in Längsrichtung berechnet.

Weiterhin ist bevorzugt, dass die Unterlenker des Zugfahrzeuges in ihrer Höhe gesteuert verstellbar sind, sodass die Anbauvorrichtung auch insgesamt in ihrer Höhe verstellbar ist, unabhängig von einer gegebenenfalls erforderlichen Neigungskorrektur. Vorzugsweise ist die Höhenverstellung der Unterlenker in die Steuerung der Anbauvorrichtung integriert.

Weiterhin bevorzugt ist ein Steuerungsverfahren, bei dem gemäß eines dritten Steuerungsmodus zur Korrektur der Querneigung des Arbeitsgerätes die Steuerungssignale für den Aktor oder die Aktoren der Dreheinrichtung zur Verdrehung des Zwischenrahmens relativ zum Tragrahmen um die Längsachse der Anbauvorrichtung ausgehend von den Ist-Neigungsinformationen sowie vorgegebenen Soll-Neigungsinformationen in Querrichtung berechnet werden.

Für eine Anbauvorrichtung, bei der auf beiden Seiten des Zwischenrahmens und/oder des Anbaurahmens Stützräder an Halterungen befestigt sind, die in seitlicher Richtung, in vertikaler Richtung, oder in seitlicher und vertikaler Richtung durch Aktoren gesteuert verstellbar sind, ist ein Steuerungsverfahren bevorzugt, bei dem gemäß eines dritten Steuerungsmodus zur Korrektur der Querneigung des Arbeitsgerätes die Steuerungssignale für den Aktor oder die Aktoren der Halterungen der Stützräder ausgehend von den Ist-Neigungsinformationen sowie vorgegebenen Soll-Neigungsinformationen in Querrichtung berechnet werden. Die verstellbaren Stützräder übernehmen bei dieser Ausgestaltungsvariante die Rolle des Aktors der Dreheinrichtung und verdrehen den Zwischenrahmen relativ zum Tragrahmen um die Längsachse der Anbauvorrichtung.

In einer weiteren bevorzugten Ausführungsform des Steuerungsverfahren werden gemäß eines vierten Steuerungsmodus zur rechtwinkligen Ausrichtung des Arbeitsgerätes die Steuerungssignale für die Aktoren zur Verstellung der Befestigungselemente des Tragrahmens und/oder des Anbaurahmens in ihrer Länge relativ zum Oberlenker und/oder zu den Unterlenkern und/ oder relativ zum Arbeitsgerät derart berechnet, dass sich nach Durchführung der Beeinflussung der Aktoren die beiden Einrichtungen zur Positionsbestimmung in einer vorgegebenen Soll-Lage bezogen auf eine vorgegebene Soll-Linie befinden.

Die vorgegebene Soll-Lage zur Soll-Linie bestimmt sich aus der Anordnung der Einrichtungen zur Positionsbestimmung relativ zueinander im Ausgangszustand. Durch die erfindungsgemäße Anordnung der Einrichtungen "in Längsrichtung hintereinander in definierter Position" lässt sich in jedem Fall aufgrund der Anordnung der Einrichtungen eine Achse berechnen, deren Ausrichtung mit der Soll-Linie verglichen werden kann. Bei einer bevorzugten Ausgestaltung der erfindungsgemäßen Anbauvorrichtung, bei der die Einrichtungen zur Positionsbestimmung im nicht ausgelenkten Zustand der Anbauvorrichtung parallel zur Längsachse hintereinander angeordnet sind, ergibt sich die zum Vergleich mit der Soll-Linie heranzuziehende Achse als Gerade durch die Positionen der beiden Einrichtungen.

Weiterhin ist bevorzugt, dass bei einem Steuerungsverfahren für eine Anbauvorrichtung, bei der die Verschiebevorrichtung mindestens zwei in Form eines Parallelogramms drehbeweglich sowohl am Zwischenrahmen als auch am Anbaurahmen befestigte Streben und mindestens einen Aktor umfasst, der drehbeweglich mit einer Strebe und dem Zwischenrahmen oder mit einer Strebe und dem Anbaurahmen befestigt ist, bei der Berechnung der Steuerungssignale für die Aktoren zur Verstellung der Befestigungselemente des Tragrahmens und/oder des Anbaurahmens die durch die kreisbahnförmige seitliche Verschiebung des Anbaurahmens bedingte Verlagerung des Arbeitspunktes in Längsrichtung korrigierend berücksichtigt wird.

Vorzugsweise erfolgt die Korrektur dadurch, dass die Befestigungselemente des Tragrahmens und/oder des Anbaurahmens in ihrer Länge relativ zum Zugfahrzeug und/oder relativ zum Arbeitsgerät in dem Maße verstellt werden wie sich aufgrund der kreisbahnförmigen Verschiebung eine Änderung des Arbeitspunktes des Arbeitsgerätes in Längsrichtung ergibt. Besonders bevorzugt erfolgt die Verstellung der Befestigungselemente in diesem Fall simultan zu der seitlichen Verschiebung.

Die beschriebenen Steuerungsmodi können unabhängig voneinander ausgewählt werden, um damit die Arbeitsweise des Zugfahrzeuges mit angekoppeltem Arbeitsgerät an die jeweils geforderte Situation anpassen zu können.

Ist beispielsweise lediglich gefordert, dass der Arbeitspunkt des Arbeitsgerätes auf einer vorgegebenen Soll-Linie oder an vorgegebene Soll-Positionen geführt wird, ohne dass es dabei auf eine Senkrechtstellung des Arbeitsgerätes zur Längsachse oder auf eine Lotrechtstellung des Arbeitsgerätes ankommt, kann zunächst gemäß des ersten Steuerungsmodus der tatsächliche Arbeitspunkt des Arbeitsgerätes ausgehend von den Ist-Positionsinformationen unter Berücksichtigung der Ist-Neigungsinformationen (Längs- und Querneigung) berechnet werden. Weicht der tatsächliche Arbeitspunkt von der Soll-Linie ab, können durch die Steuerung Steuerungssignale berechnet werden, die eine oder mehrere der folgenden Maßnahmen einleiten:
- Beeinflussung der Aktoren zur Verstellung der Befestigungselemente des Tragrahmens und/oder der Befestigungselemente des Anbaurahmens in ihrer Länge relativ zum Zugfahrzeug und/oder relativ zum Arbeitsgerät;
- Beeinflussung der Aktoren der Verschiebevorrichtung des Zwischenrahmens zur Verschiebung des Anbaurahmens quer zur Längsachse relativ zum Zwischenrahmen;
- Beeinflussung des mindestens einen Aktors der Dreheinrichtung oder gegebenenfalls der Halterungen der Stützräder zur Verdrehung des Zwischenrahmens relativ zum Tragrahmen um die Längsachse der Anbauvorrichtung.

Ist beispielsweise weiterhin eine Neigungskorrektur in Längsrichtung erforderlich, können gemäß des zweiten Steuerungsmodus Steuerungssignale berechnet werden für die Aktoren zur Verstellung der Befestigungselemente des Tragrahmens und/oder des Anbaurahmens in ihrer Länge relativ zum Oberlenker und/oder zu den Unterlenkern und/oder relativ zum Arbeitsgerät ausgehend von den Ist-Neigungsinformationen sowie vorgegebenen Soll-Neigungsinformationen in Längsrichtung.

Soll auch eine Querneigung ausgeglichen werden, also eine Abweichung des Arbeitsgerätes aus seiner Lotrechten, ist der dritte Steuerungsmodus anzuwenden, wonach mindestens ein Aktor zur Verdrehung des Zwischenrahmens gegenüber dem Tragrahmen aktiviert wird.

Ist eine rechtwinklige Ausrichtung des Arbeitsgerätes zur Längsachse gefordert, wird der vierte Steuerungsmodus ausgewählt, um die Aktoren zur Verstellung der Befestigungselemente des Tragrahmens und/oder des Anbaurahmens in ihrer Länge relativ zum Oberlenker und/oder zu den Unterlenkern und/oder relativ zum Arbeitsgerät derart zu verstellen, dass sich nach Durchführung der Beeinflussung der Aktoren die beiden Einrichtungen zur Positionsbestimmung in einer vorgegebenen Soll-Lage bezogen auf eine vorgegebene Soll-Linie befinden. Die senkrechte Ausrichtung des Arbeitsgerätes kann unabhängig von den anderen Steuerungsmodi erfolgen oder mit einem oder mehreren der Steuerungsmodi kombiniert werden.

In einer bevorzugten Weiterbildung sind die Steuerungsmodi adaptiv gestaltet in dem Sinne, dass die Steuerungssignale an die jeweiligen Aktoren verstärkt werden, wenn sich der tatsächliche Arbeitspunkt des Arbeitsgerätes zu langsam auf den Sollwert hin bewegt oder weit vom Sollwert entfernt liegt. Bei Hydraulikzylindern als Aktoren kann die Verstärkung der Steuerungssignale beispielsweise darin bestehen, dass der Öldruck auf die Zylinder erhöht wird, sodass diese schneller verfahren oder eine größere Kraft aufbringen.

Bevorzugt sind alle Steuerungsmodi gleichzeitig aktiv, um eine vollautomatische optimierte Ausrichtung und Korrektur der Position des Arbeitspunktes des Arbeitsgerätes auf eine vorgegebenen Soll-Linie oder auf vorgegebene Soll-Positionen sicherzustellen.

Die erfindungsgemäße Anbauvorrichtung, die erfindungsgemäße Steuerungseinrichtung und das erfindungsgemäße Steuerungsverfahren ermöglichen es, auch in anspruchsvollem Gelände und in engen Arbeitsräumen das Arbeitsgerät schnell, effizient und zuverlässig auf eine vorgegebene Soll-Position oder Soll-Linie automatisiert zu führen. Dies ist insbesondere in hügeligem Gelände oder in Spalieranlagen von Vorteil. Durch die vollautomatische präzise Positionierung des Arbeitspunktes des Arbeitsgerätes können Düngemittel oder Pflanzenschutzmittel sehr gezielt und in geringer Menge ein- bzw. aufgebracht werden, was gegenüber dem Stand der Technik eine signifikante Verbesserung im Hinblick auf eine nachhaltige Landwirtschaft mit sich bringt.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten. Es zeigen:
- Fig. 1:: Schematische Draufsicht auf ein Zugfahrzeug mit angebautem Arbeitsgerät gemäß dem Stand der Technik in der Ebene (links) und am Hang (rechts)
- Fig. 2:: Schematische Draufsicht auf ein Zugfahrzeug mit einem über eine erfindungsgemäße Anbauvorrichtung angekoppelten Arbeitsgerät in der Ebene (links) und am Hang (rechts)
- Fig. 3:: Schematische Darstellung der Neigungskorrektur der Antennenposition - Drehung des Zwischenrahmens um den Drehpunkt
- Fig. 4:: Schematische Darstellung der Neigungskorrektur der Antennenposition - seitliche Verschiebung des Anbaurahmens
- Fig. 5:: Perspektivische Darstellung einer ersten Ausführungsform der erfindungsgemäßen Anbauvorrichtung
- Fig. 6:: Vorderansicht auf die Anbauvorrichtung nach Fig. 5
- Fig. 7:: Seitenansicht auf die Anbauvorrichtung nach Fig. 5
- Fig. 8:: Perspektivische Darstellung einer zweiten Ausführungsform der erfindungsgemäßen Anbauvorrichtung
- Fig. 9:: Perspektivische Rückansicht der Anbauvorrichtung nach Fig. 8
- Fig. 10:: Perspektivische Darstellung einer dritten Ausführungsform der erfindungsgemäßen Anbauvorrichtung
- Fig. 11:: Draufsicht auf die Anbauvorrichtung nach Fig. 10 nach seitlicher Verschiebung des Anbaurahmens nach rechts
- Fig. 12:: Draufsicht auf die Anbauvorrichtung nach Fig. 10 nach seitlicher Verschiebung des Anbaurahmens nach links
- Fig. 13:: Perspektivische Darstellung der Anbauvorrichtung nach Fig. 10 mit angekoppeltem Arbeitsgerät
- Fig. 14:: Perspektivische Darstellung einer vierten Ausführungsform der erfindungsgemäßen Anbauvorrichtung
- Fig. 15:: Perspektivische Rückansicht der Anbauvorrichtung nach Fig. 14

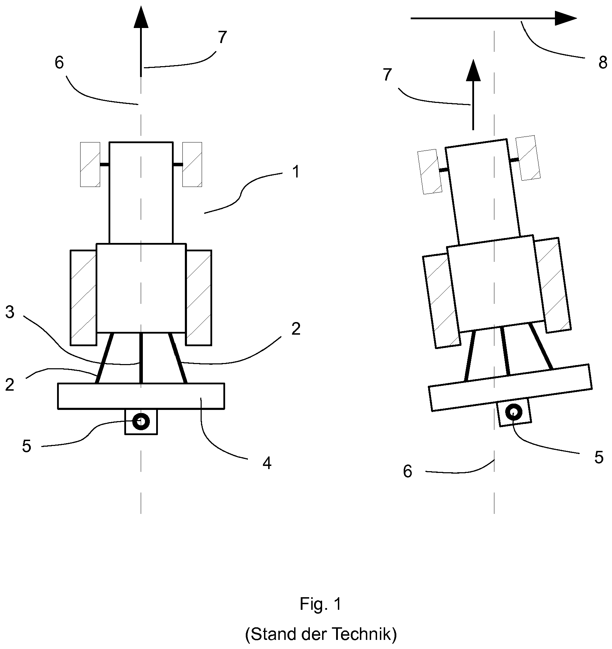

Fig. 1 zeigt in einer schematischen Draufsicht ein Zugfahrzeug 1 gemäß dem Stand der Technik, das über einen Dreipunkt-Kraftheber mit einem Oberlenker 3 und zwei Unterlenkern 2 verfügt. An dem Dreipunkt-Kraftheber ist ein Arbeitsgerät 4 angebaut, das in Fig. 1 in stilisierter Form dargestellt ist und einen definierten Arbeitspunkt 5 aufweist. Beispiele für derartige Arbeitsgeräte mit einem definierten Arbeitspunkt sind Setz- oder Pflanzmaschinen. Das Zugfahrzeug 1 folgt in Fahrtrichtung 7 einer vorgegebenen Soll-Linie 6 für den Arbeitspunkt 5.

Auf der linken Seite in Fig. 1 ist die idealtypische Situation in der Ebene dargestellt. In Abwesenheit jeglicher Bodenunebenheiten oder Neigungen des Geländes lässt sich das Zugfahrzeug 1 so steuern, dass der Arbeitspunkt 5 des Arbeitsgerätes 4 der Soll-Linie 6 folgen kann. Allerdings liegen solche idealtypischen Verhältnisse in der Realität seltenst vor. Bereits leichte Bodenunebenheiten, Furchen im Boden, aufgeweichter Boden nach Regenfällen und dergleichen führen dazu, dass die Vorder- und Hinterräder des Zugfahrzeugs von der vorgesehenen Spur abweichen oder unterschiedlich tief in den Boden drücken, sodass das Arbeitsgerät 4 seitlich ausweicht und der Arbeitspunkt 5 von der Soll-Linie 6 abweicht. Besonders gravierend ist dieses Problem bei landwirtschaftlichen Nutzflächen, die am Hang liegen, also bei der Fahrt des Zugfahrzeugs über ein Gelände, das eine Hangneigung aufweist. Diese Situation ist stilisiert auf der rechten Seite in Fig. 1 dargestellt, wobei die Hangneigung hangabwärts durch den Pfeil 8 symbolisiert ist. Das Gelände fällt demnach in Pfeilrichtung 8 ab. Um in diesem Geländeprofil einer quer zum Gefälle verlaufenden Soll-Linie 6 folgen zu können und um zu vermeiden, dass das Zugfahrzeug 1 insgesamt aufgrund der Schwerkraft hangabwärts rutscht, ist ein Lenkeinschlag hangaufwärts erforderlich, sodass sich eine Querstellung des Zugfahrzeuges 1 zur Fahrtrichtung 7 ergibt wie in Fig. 1 angedeutet. Dies hat zur Folge, dass die Längsachse des Zugfahrzeuges 1 und somit auch die Längsachse des Arbeitsgerätes 4 nicht mehr mit der Soll-Linie 6 übereinstimmen, sondern winkelversetzt sind. Der Arbeitspunkt 5 des Arbeitsgerätes 4 liegt neben der Soll-Linie 6.

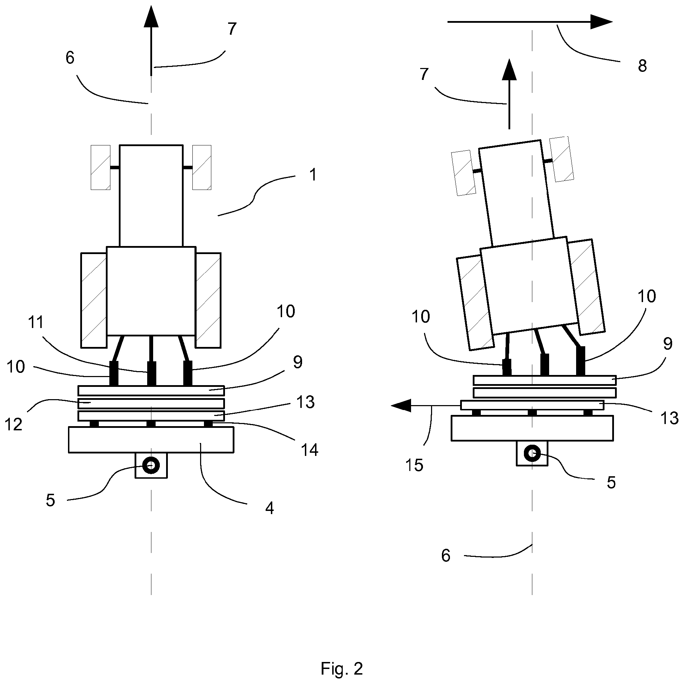

Fig. 2 zeigt in einer schematischen Draufsicht ein Zugfahrzeug 1, das über einen Dreipunkt-Kraftheber mit einem Oberlenker und zwei Unterlenkern verfügt, und an das über eine erfindungsgemäße Anbauvorrichtung ein landwirtschaftliches Arbeitsgerät 4 mit einem definierten Arbeitspunkt 5 angekoppelt ist. Die erfindungsgemäße Anbauvorrichtung umfasst einen Tragrahmen 9 mit einem Befestigungselement 11 zur Kopplung an den Oberlenker und je ein Befestigungselement 10 zur Kopplung an die Unterlenker des Zugfahrzeuges. Die Befestigungselemente können beispielsweise als doppelt wirkende Hydraulikzylinder oder als elektromechanische Komponenten realisiert sein. Die Anbauvorrichtung umfasst weiterhin einen Anbaurahmen 13, der über Befestigungselemente 14 zur Kopplung an das Arbeitsgerät 4 verfügt. Das Arbeitsgerät kann über bekannte Befestigungsmechanismen angekoppelt sein, z.B. über Maulkupplungen oder Steckverbindungen. Des Weiteren umfasst die Anbauvorrichtung einen Zwischenrahmen 12, der zwischen dem Tragrahmen 9 und dem Anbaurahmen 13 angeordnet ist. Das Zugfahrzeug 1 folgt in Fahrtrichtung 7 einer vorgegebenen Soll-Linie 6 für den Arbeitspunkt 5.

Analog zur Darstellung des Zugfahrzeuges gemäß Stand der Technik in Fig. 1 ist auf der linken Seite der Fig. 2 die idealtypische Situation in der Ebene dargestellt. In Abwesenheit jeglicher Bodenunebenheiten oder Neigungen des Geländes folgt das Zugfahrzeug 1 und damit auch der Arbeitspunkt 5 des Arbeitsgerätes 4 der Soll-Linie. Wie bereits erwähnt kommen derartige idealtypische Verhältnisse in der Realität jedoch kaum vor.

Auf der rechten Seite der Fig. 2 ist analog zu Fig. 1 die Situation am Hang dargestellt. Das Zugfahrzeug wird mit einem Lenkeinschlag hangaufwärts gesteuert, sodass sich eine Querstellung des Zugfahrzeuges 1 zur Fahrtrichtung 7 ergibt. Im Gegensatz zum Stand der Technik ist es bei der erfindungsgemäßen Anbauvorrichtung jedoch möglich, mit Hilfe von mindestens zwei Einrichtungen zur Positionsbestimmung, die - in Fig. 2 nicht dargestellt - an dem Anbaurahmen 13 und/oder dem Arbeitsgerät 4 in Richtung der Längsachse hintereinander in definierter Position angebracht sind, zunächst die Abweichung der Ausrichtung des Arbeitsgerätes 4 zu ermitteln. Auf Basis dieser Information können über eine Steuerungseinrichtung die Aktoren der Anbauvorrichtung angesteuert werden, um die Abweichung des Arbeitspunktes 5 von der Soll-Linie 6 zu korrigieren. In dem stilisiert dargestellten Beispiel in Fig. 2 werden als eine Korrekturmaßnahme die Befestigungselemente 10 des Tragrahmens 9 in ihrer Länge relativ zu den Unterlenkern verstellt. Im Beispiel wird das mit dem linken Unterlenker verbundene Befestigungselement 10 bezogen auf seine Ausgangslänge des Ausgangszustandes verkürzt, wohingegen das mit dem rechten Unterlenker verbundene Befestigungselement 10 bezogen auf seine Ausgangslänge des Ausgangszustandes verlängert wird. Durch diese Maßnahme wird erreicht, dass der Tragrahmen 9 - und damit die gesamte Anbauvorrichtung - senkrecht zur Soll-Linie 6 ausgerichtet wird. Diese Maßnahme alleine reicht allerdings nicht aus, um den Arbeitspunkt 5 des Arbeitsgerätes 4 wieder auf seine Soll-Position auf der Soll-Linie 6 zu bringen. Um dies zu erreichen, ist eine weitere Korrekturmaßnahme erforderlich, bei der die Verschiebevorrichtung des Zwischenrahmens 12 über ihr zugeordnete Aktoren den Anbaurahmen 13 quer zur Längsachse relativ zum Zwischenrahmen 12 verschiebt, im dargestellten Beispiel nach links, wie durch den Pfeil 15 angedeutet. Falls aufgrund des Abdriftens des Zugfahrzeugs auch eine Neigungskorrektur in Fahrtrichtung erforderlich wird, kann das mit dem Oberlenker verbundene Befestigungselement 11 bezogen auf seine Ausgangslänge des Ausgangszustandes entsprechend verkürzt oder verlängert werden.

Konkrete Ausführungsformen der erfindungsgemäßen Anbauvorrichtung werden mit Bezug auf die nachfolgenden Figuren näher erläutert.

Erfindungsgemäß ist der Zwischenrahmen 12 mittels einer Dreheinrichtung relativ zum Tragrahmen 9 um die Längsachse der Anbauvorrichtung verdrehbar. Hierfür ist der Dreheinrichtung mindestens ein Aktor zugeordnet. Eine Verdrehung des Zwischenrahmens kann beispielsweise vorgenommen werden, um in einer Hanglage wie in der Fig. 2 rechts dargestellt die Anbauvorrichtung aus der Hangneigung wieder in die Waagerechte zu bringen. Dadurch wird es möglich, auch in hügeligem Gelände beispielsweise Pfosten, Pfähle oder Pflanzen wie Bäume oder Rebstöcke beim Einbringen in die Erde lotrecht auszurichten.

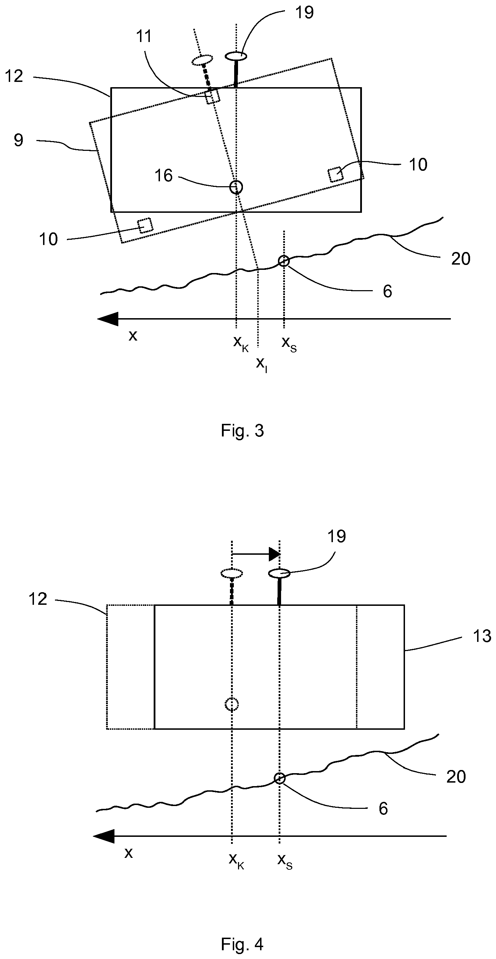

Eine weitere vorteilhafte Anwendung der Dreheinrichtung ist in Fig. 3 und Fig. 4 schematisch dargestellt. Es handelt sich hierbei um die Neigungskorrektur der Antennenposition. Fig. 3 zeigt einen Querschnitt durch ein Gelände, das eine Hangneigung aufweist, schematisch dargestellt durch eine Bodenoberfläche 20, die von rechts oben nach links unten verläuft. Das Zugfahrzeug bewegt sich quer zum Hang aus der Bildfläche heraus und ist in Fig. 3 nicht abgebildet. Dargestellt ist eine Draufsicht auf einen Teil der Anbauvorrichtung entgegen der Fahrtrichtung betrachtet. Der Anbaurahmen 9, der drehfest über die Befestigungselemente 10 mit den Unterlenkern und mit dem Befestigungselement 11 mit dem Oberlenker verbunden ist, weist im Wesentlichen dieselbe Neigung auf wie der Hang.

Auf dem Anbaurahmen 13 und/oder dem Arbeitsgerät, das an den Anbaurahmen angekoppelt ist, sind mindestens zwei Einrichtungen 19 zur Positionsbestimmung in Richtung der Längsachse hintereinander in definierter Position angebracht. Der Übersichtlichkeit halber wird in Fig. 3 angenommen, dass die beiden Einrichtungen 19 in Längsrichtung genau hintereinander angebracht sind, z.B. als Doppelantenne, sodass nur die vordere von beiden zu sehen ist. Ferner wird angenommen, dass sich der Arbeitspunkt des Arbeitsgerätes wie in Fig. 1 und 2 in Querrichtung mittig unter dem Anbaurahmen 13 befindet. Mit dem Buchstaben "x" sind in Fig. 3 und 4 die Positionen des Arbeitspunktes in Richtung der Hangneigung bezeichnet, wobei x_{S} die Soll-Linie 6 repräsentiert. Die Ist-Position bei der Hangfahrt ist mit x_{I} bezeichnet.

Wie anhand Fig. 3 leicht zu erkennen ist, entspricht die über die Einrichtungen 19 zur Positionsbestimmung ermittelte Position des Arbeitspunktes nicht der tatsächlichen Position x_{I}, sondern liegt deutlich weiter links im Bild hangabwärts. Es ist daher vorteilhaft, wenn die Anbauvorrichtung über mindestens einen Neigungssensor verfügt, der eine Information über die aktuelle Neigung des Arbeitsgerätes in Querrichtung, also in Richtung der Hangneigung, liefern kann. Auf Basis dieser Neigungsinformation können Maßnahmen ergriffen werden, um den Arbeitspunkt des Arbeitsgerätes auf die Soll-Linie 6 zu bringen.

Eine erste Möglichkeit besteht darin, den Anbaurahmen 13 und damit das Arbeitsgerät in die Waagerechte zu bringen, wie dies in Fig. 3 dargestellt ist. Dazu wird eine Drehung des Zwischenrahmens 12 mit Hilfe der Dreheinrichtung 16 vorgenommen, die dem ermittelten Neigungswinkel entspricht. Der tatsächliche Arbeitspunkt des Arbeitsgerätes nach der Neigungskorrektur befindet sich noch weiter von der Soll-Linie 6 entfernt und ist mit x_{K} bezeichnet. Der Vorteil der waagerechten Ausrichtung des Anbaurahmens 13 besteht darin, dass die über die Einrichtungen 19 zur Positionsbestimmung ermittelte Position des Arbeitspunktes nun dem tatsächlichen Arbeitspunkt x_{K} entspricht.

Um den Arbeitspunkt des Arbeitsgerätes auf seine Soll-Position zu bringen, ist nun noch eine Seitenverschiebung erforderlich, wie dies in Fig. 4 schematisch dargestellt ist. Gegenüber Fig. 3 ist in Fig. 4 der Tragrahmen 9 in der Darstellung weggelassen. Ausgehend von der Position nach der Neigungskorrektur kann nun der Anbaurahmen 13 mittels der Verschiebevorrichtung des Zwischenrahmens 12 seitlich gegen die Hangneigung verschoben werden, sodass der tatsächliche Arbeitspunkt wieder auf der Soll-Linie 6 liegt.

Eine Neigungskorrektur des Anbaurahmens 13 ist insbesondere dann erforderlich, wenn das Arbeitsgerät lotrecht stehen muss, beispielsweise zum Einbringen von Pflanzen oder Pfählen in den Boden. Selbstverständlich können auch andere Winkel als die Lotrechte eingestellt werden, wenn dies gewünscht oder erforderlich ist. So ist es beispielsweise üblich, in Gegenden mit starkem Windaufkommen Pfähle oder Pflanzen leicht gegen den Wind geneigt zu setzen bzw. zu pflanzen, um damit langfristig eine durch den Wind bedingte lotrechte Stellung der Pfähle oder Pflanzen zu erreichen.

Bei Anwendungen, bei denen es auf eine lotrechte Stellung des Arbeitsgerätes nicht ankommt, sondern nur der Arbeitspunkt des Arbeitsgerätes auf einer Soll-Linie geführt werden soll, kann auf eine waagerechte Ausrichtung des Anbaurahmens verzichtet werden. In einem solchen Fall kann ausgehend von der über die Einrichtungen 19 zur Positionsbestimmung ermittelte Position des Arbeitspunktes und der ermittelten Neigungsinformation der tatsächliche aktuelle Arbeitspunkt x_{I} berechnet werden. Anschließend kann durch eine Seitenverschiebung und/oder eine Verstellung der Befestigungselemente 10 des Tragrahmens 9 oder der (in Fig. 3 nicht dargestellten) Befestigungselemente des Anbaurahmens 13 der Arbeitspunkt des Arbeitsgerätes auf seinen Sollwert x_{S} gebracht werden.

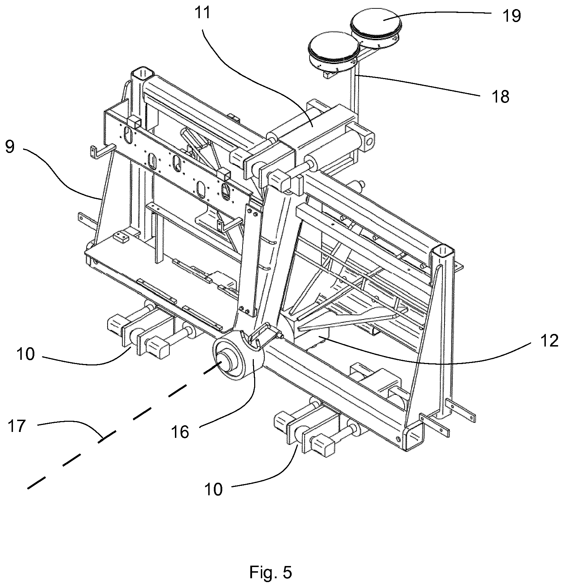

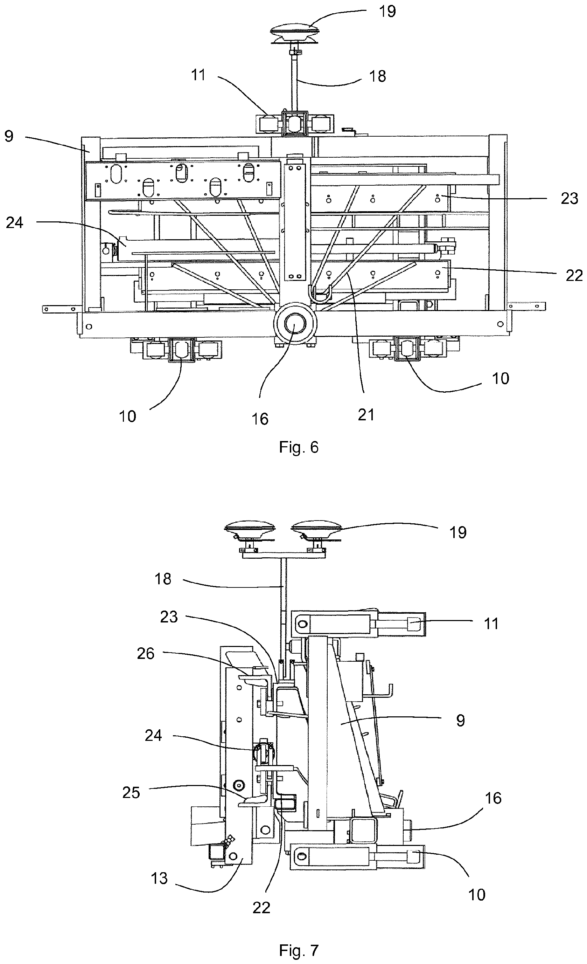

Fig. 5 zeigt eine erste Ausführungsform der erfindungsgemäßen Anbauvorrichtung in perspektivischer Darstellung vom Zugfahrzeug aus betrachtet. In Fig. 6 ist dieselbe Ausführungsform in der Vorderansicht und in Fig. 7 in der Seitenansicht dargestellt. Der Tragrahmen 9 umfasst im Wesentlichen zwei parallele Querholme oben und unten, die über zwei Längsholme rechts und links verbunden sind. Mittig im unteren Querholm ist eine Buchse angeordnet, die den äußeren Teil der Dreheinrichtung 16 bildet. An der Unterseite des unteren Querholms sind etwa auf halber Länge zwischen der Buchse und der Außenkante die beiden Befestigungselemente 10 zur Kopplung an die Unterlenker um die Vertikale drehbeweglich angebracht. Alternativ können die Befestigungselemente 10 auch starr angebracht sein. Diese Befestigungselemente 10 sind als sogenannte Verschiebetaschen ausgestaltet und umfassen jeweils eine äußere Hülse, die an dem unteren Querholm befestigt ist und ein in der äußeren Hülse geführtes Innenteil, das in Längsrichtung in der äußeren Hülse bewegbar ist. Auf beiden Seiten der Hülse ist jeweils ein Hydraulikzylinder als Aktor mit einem Ende an der Hülse und mit dem anderen Ende an dem Innenteil befestigt. In analoger Weise ist das Befestigungselement 11 zur Kopplung an den Oberlenker ausgeführt und von oben mittig an dem oberen Querholm um die Vertikale drehbeweglich angebracht. Mittels dieser drei Befestigungselemente 10, 11 kann der Tragrahmen 9 durch Ansteuerung der jeweiligen Aktoren in Richtung der Längsachse 17 gegenüber dem Zugfahrzeug verschoben werden.

In der Buchse des Tragrahmens 9 ist relativ zur Buchse drehbeweglich eine Welle gelagert, deren Achse der Längsachse 17 entspricht. Diese Welle ist mit dem Zwischenrahmen 12 verbunden, der Bleche 21 umfasst, die sich sternförmig von der Welle ausgehend nach beiden Seiten und nach oben erstrecken. Auf der dem Anbaurahmen 13 zugewandten Seite sind an den Blechen 21 horizontal verlaufend eine untere Führungsschiene 22 und eine obere Führungsschiene 23 befestigt, die die wesentlichen Bestandteile der Verschiebevorrichtung des Zwischenrahmens 12 bilden. In vertikaler Richtung zwischen der oberen und der unteren Führungsschiene ist ebenfalls horizontal verlaufend ein Hydraulikzylinder 24 als Aktor der Verschiebevorrichtung angebracht, der mit seinem einen Ende am Zwischenrahmen 12 befestigt ist.

Das andere Ende des Hydraulikzylinders 24 ist am Anbaurahmen 13 befestigt. An seiner dem Zwischenrahmen 12 zugewandten Seite weist der Anbaurahmen 13 ein unteres Winkelprofil 25 und ein oberes Winkelprofil 26 auf. Die beiden Winkelprofile 25, 26 sind in der unteren Führungsschiene 22 und der oberen Führungsschiene 23 des Zwischenrahmens geführt, sodass der Anbaurahmen 13 quer zur Längsachse 17 relativ zum Zwischenrahmen 12 verschiebbar ist.

Am Anbaurahmen 13 ist ein Tragholm 18 angebracht, der sich vertikal nach oben erstreckt. An seinem oberen Ende sind zwei GPS-Antennen als Einrichtungen zur Positionsbestimmung 19 angebracht, die im nicht ausgelenkten Zustand der Anbauvorrichtung auf der Längsachse 17 hintereinander und relativ zueinander waagerecht angeordnet sind. Hinsichtlich des Tragholms 18 zeigen die Fig. 5 und Fig. 7 unterschiedliche Ausgestaltungen, wobei der Tragholm 18 als gerader Stab oder in L-Form gestaltet ist.

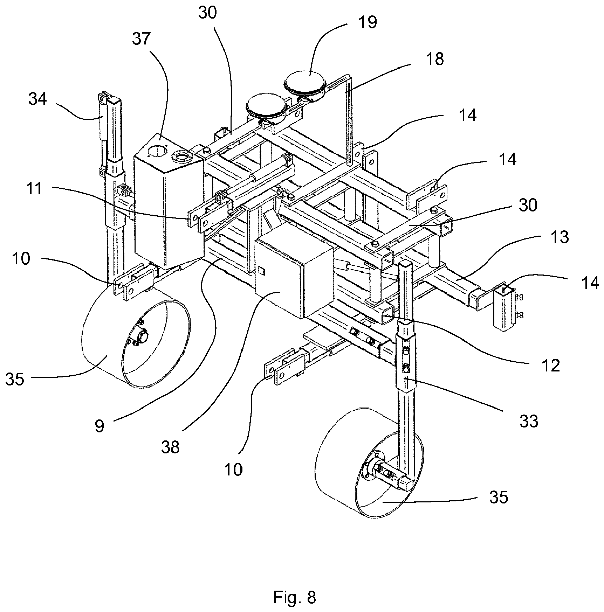

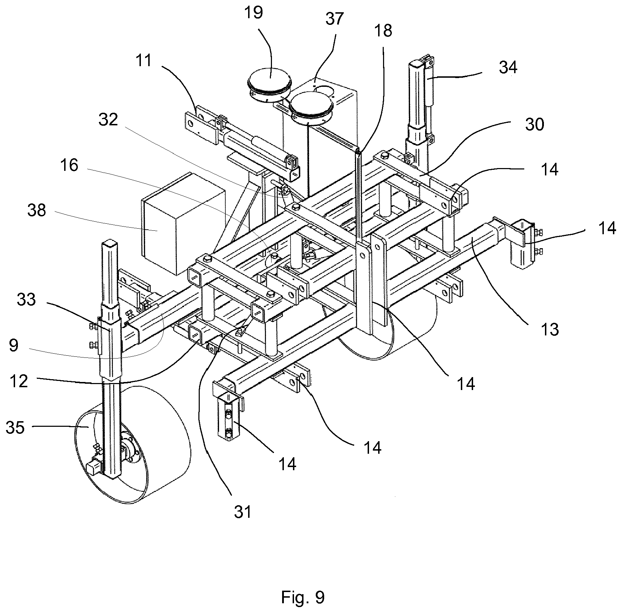

Fig. 8 zeigt eine perspektivische Darstellung einer zweiten Ausführungsform der erfindungsgemäßen Anbauvorrichtung in der Frontansicht vom Zugfahrzeug aus betrachtet. Fig. 9 zeigt dieselbe Ausführungsform in der Rückansicht vom Arbeitsgerät aus betrachtet. Zugfahrzeug und Arbeitsgerät sind nicht dargestellt.

Die Anbauvorrichtung umfasst einen Tragrahmen 9, der im Wesentlichen auf einem quer zur Fahrtrichtung, waagerecht ausgerichteten Querholm beruht. Auf der Unterseite des Querholms sind drehbeweglich - oder alternativ starr - Befestigungselemente 10 zur Kopplung an die Unterlenker befestigt, die als sogenannte Schiebetaschen ausgestaltet sind. Jede Schiebetasche umfasst eine äußere Hülse, die an dem Querholm befestigt ist und ein in der äußeren Hülse geführtes Innenteil, das in Längsrichtung in der äußeren Hülse bewegbar ist. An jeder Schiebetasche ist auf ihrer Unterseite ein doppelt wirkender Hydraulikzylinder als Aktor mit einem Ende an der Hülse und mit dem anderen Ende an dem Innenteil befestigt. In der Mitte des Querholms ist nach oben aufragend ein Träger aufgesetzt, der seitlich trapezförmig abgestützt ist. Am oberen Ende dieses Trägers ist ein Befestigungselement 11 zur Kopplung an den Oberlenker drehbeweglich - oder alternativ starr - angeordnet, der im Beispiel ebenfalls als Schiebetasche mit zugeordnetem Hydraulikzylinder als Aktor ausgeführt ist. Mittels dieser drei Befestigungselemente 10, 11 kann der Tragrahmen 9 durch Ansteuerung der jeweiligen Aktoren in Richtung der Längsachse gegenüber dem Zugfahrzeug verschoben werden.

Die Anbauvorrichtung umfasst weiterhin einen Zwischenrahmen 12, der in der dargestellten beispielhaften Ausführungsform zwei Querholme aufweist, die in vertikaler Richtung übereinander angeordnet sind und im Beispiel in seitlicher Richtung etwas kürzer ausgeführt sind als der Tragrahmen 9. Die beiden Querholme des Zwischenrahmens 12 sind über drei rohrförmige Stützen fest miteinander verbunden. Der untere Querholm des Zwischenrahmens 12 ist über eine Dreheinrichtung 16 mit dem Querholm des Tragrahmens 9 um die Längsachse drehbeweglich verbunden. Zur Betätigung der Dreheinrichtung 16 ist ein in seiner Länge verstellbarer Aktor 32 mit einem Ende am Tragrahmen 9 an der Spitze der trapezförmigen Halterung für das Befestigungselement 11 befestigt. Mit seinem anderen Ende ist der Aktor 32 in Querrichtung exzentrisch am Zwischenrahmen 12 angebracht. Im Beispiel ist der Aktor 32 als doppelt wirkender Hydraulikzylinder ausgeführt.

Weiterhin umfasst die Anbauvorrichtung einen Anbaurahmen 13, der ähnlich wie der Zwischenrahmen 12 zwei übereinander angeordnete Querholme aufweist, die über drei rohrförmige Stützen miteinander verbunden sind. Auf der dem Zwischenrahmen 12 abgewandten Seite weist der Anbaurahmen 13 Befestigungselemente 14 zur Kopplung an das Arbeitsgerät auf. Im dargestellten Beispiel sind die Befestigungselemente 14 als fünf Doppelbleche mit Durchgangsbohrungen ausgeführt, in denen das Arbeitsgerät mit einer Steckverbindung befestigt werden kann. Bei dieser Ausführungsform der erfindungsgemäßen Anbauvorrichtung sind die Befestigungselemente 14 zur Ankopplung des Arbeitsgerätes nicht längenverstellbar ausgeführt. Eine Längenverstellung erfolgt ausschließlich über die Befestigungselemente 10, 11 am Tragrahmen 9. Weitere Befestigungselemente 14 sind an den seitlichen Enden des unteren Querholms des Anbaurahmens 13 vorgesehen. Je nach Ausgestaltung des Arbeitsgerätes kann dieses auch in die Querholme eingehängt werden, ohne dass es spezieller Befestigungselemente 14 bedarf.

Am unteren Querholm des Zwischenrahmens 12 sind drei Streben 30 drehbeweglich befestigt, die jeweils als zwei parallele Flacheisen ausgeführt sind, von denen eines mit einem Ende an der Oberseite und eines mit einem Ende an der Unterseite des Querholms anliegt. Das jeweils andere Ende der Streben 30 ist in analoger Weise drehbeweglich am unteren Querholm des Anbaurahmens 13 befestigt, sodass die beiden Querholme und die Streben ein Parallelogramm bilden. Die oberen Querholme des Zwischenrahmens 12 und des Anbaurahmens 13 sind ebenfalls durch drei Streben 30, die als doppelte Flacheisen ausgeführt sind, drehbeweglich miteinander verbunden. Die Streben 30 bilden eine Verschiebevorrichtung, mittels derer der Anbaurahmen 13 quer zur Längsachse relativ zum Zwischenrahmen 12 verschiebbar ist. Zur Verstellung der Verschiebevorrichtung sind zwei Aktoren 31 vorgesehen, die im dargestellten Beispiel als einfach wirkende Hydraulikzylinder ausgeführt sind. Jeweils ein Ende der Zylinder 31 ist am unteren Querholm des Zwischenrahmens 12 links und rechts von der Dreheinrichtung drehbeweglich befestigt. Das jeweils andere Ende der Zylinder 31 ist etwa mittig an den äußeren Streben 30 drehbeweglich befestigt.

Auf dem oberen Querholm des Anbaurahmens 13 ist ein L-förmiger Tragholm 18 angebracht, der starr mit dem Querholm - und nicht mit der Strebe - verbunden ist. Am oberen Schenkel des Tragholms 18 sind zwei GPS-Antennen als Einrichtungen zur Positionsbestimmung 19 angebracht, die im nicht ausgelenkten Zustand der Anbauvorrichtung auf der Längsachse hintereinander und relativ zueinander waagerecht angeordnet sind.

Auf beiden Seiten des Tragrahmens 9 sind Halterungen 33 angebracht, die in seitlicher Richtung, also quer zur Längsachse, und in vertikaler Richtung verstellbar sind. Im dargestellten Beispiel umfassen die Halterungen jeweils ein Vierkantrohr, das im Hohlraum des Tragrahmens 9 geführt ist und am äußeren Ende ein im rechten Winkel zum Vierkantrohr angebautes Vierkantprofil umfasst. In diesem vertikal ausgerichteten Vierkantprofil ist ein weiteres Vierkantrohr geführt, an dessen unterem Ende ein Stützrad 35 befestigt ist. Das Stützrad kann entweder von der Halterung nach innen weisend oder von der Halterung nach außen weisend befestigt werden. Die Verstellbarkeit der Halterungen 33 kann so ausgeführt sein, dass die seitliche und vertikale Ausrichtung manuell, zumeist vor Inbetriebnahme der Anbauvorrichtung an die jeweilige Situation, z.B. eine Hangneigung, angepasst wird. Diese Art der Verstellmöglichkeit ist in Fig. 8 und Fig. 9 anhand des in Fahrtrichtung betrachtet linken Stützrades dargestellt. Seitliche und vertikale Ausrichtung werden festgelegt und beispielsweise mit Schraubverbindungen fixiert. Alternativ kann die Verstellbarkeit der Halterungen 33 derart ausgeführt sein, dass das betreffende Stützrad sowohl in seitlicher als auch in vertikaler Richtung durch Aktoren gesteuert verstellbar ist. Diese Art der Verstellmöglichkeit ist anhand des rechten Stützrades beispielhaft dargestellt. Für die vertikale Verstellung ist ein Hydraulikzylinder als Aktor 34 mit einem Ende an dem vertikalen Vierkantprofil befestigt und mit seinem anderen Ende am oberen Ende des vertikal verlaufenden, in dem Vierkantprofil geführten Vierkantrohres. Zur seitlichen Verstellung ist ein weiterer Aktor, der im Beispiel ebenfalls als Hydraulikzylinder ausgeführt ist, mit einem Ende an dem Vierkantprofil und mit dem anderen Ende am untere Querholm des Tragrahmens 9 befestigt.

Die Darstellung der unterschiedlichen Halterungen für die Stützräder - einerseits manuell, andererseits durch Aktoren gesteuert verstellbar - in den Fig. 8 bis 15 dient lediglich der Verdeutlichung der Ausführungsmöglichkeiten. Vorzugsweise sind die Halterungen auf beiden Seiten entweder manuell verstellbar oder durch Aktoren gesteuert verstellbar ausgeführt.

Die in Fig. 8 und 9 dargestellte Ausführungsform der erfindungsgemäßen Anbauvorrichtung umfasst des Weiteren einen Tank 37 für Hilfsstoffe, im Beispiel für Hydrauliköl, der auf der dem Zugfahrzeug zugewandten Seite des Tragrahmens 9 angebracht ist. Aus dem Tank 37 können die als Hydraulikzylinder ausgeführten Aktoren der Anbauvorrichtung mit Hydrauliköl versorgt werden.

Weiterhin ist am Tragrahmen 9 ein Gehäuse 38 vorgesehen, in dem sämtliche für den Betrieb der Anbauvorrichtung erforderlichen Elektronik-Einrichtungen untergebracht werden können, sodass sie gegen Staub, Schmutz und Witterungseinflüsse geschützt sind. Auch die Steuerungseinrichtung zur Steuerung der Aktoren der Anbauvorrichtung ist in dem Gehäuse 38 untergebracht.

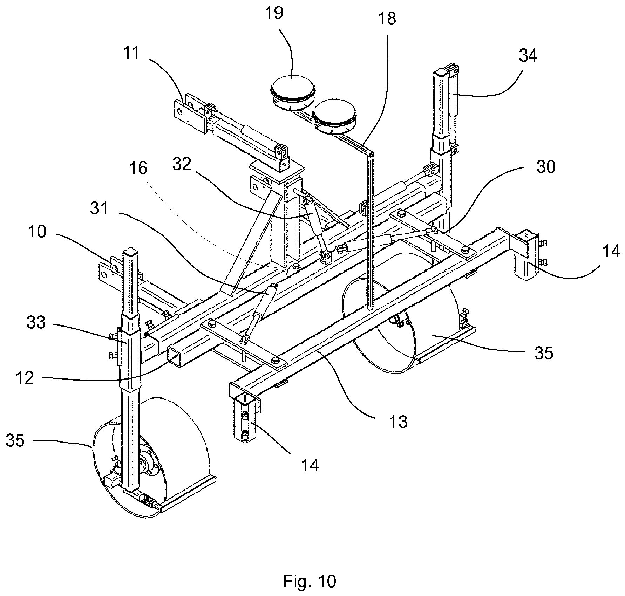

Fig. 10 zeigt eine perspektivische Darstellung einer dritten Ausführungsform der erfindungsgemäßen Ausführungsform in der Rückansicht vom Arbeitsgerät aus betrachtet, das selbst nicht abgebildet ist. Diese dritte Ausführungsform unterscheidet sich von der oben beschriebenen zweiten Ausführungsform dadurch, dass die Verschiebevorrichtung als einfaches Parallelogramm ausgeführt ist, bei dem nur die unteren Querholme vorhanden sind, und dass lediglich zwei Streben 30 vorhanden sind. Der Tragholm 18, an dem die beiden GPS-Antennen als Einrichtungen zur Positionsbestimmung 19 angebracht sind, ist am unteren Querholm des Anbaurahmens 13 befestigt. Alle weiteren Merkmale dieser Ausführungsform entsprechen in analoger Weise denen der zweiten Ausführungsform. Auf die Darstellung des Tanks für das Hydrauliköl sowie das Gehäuse für die Elektronik-Einrichtungen wurde der Übersicht halber verzichtet.

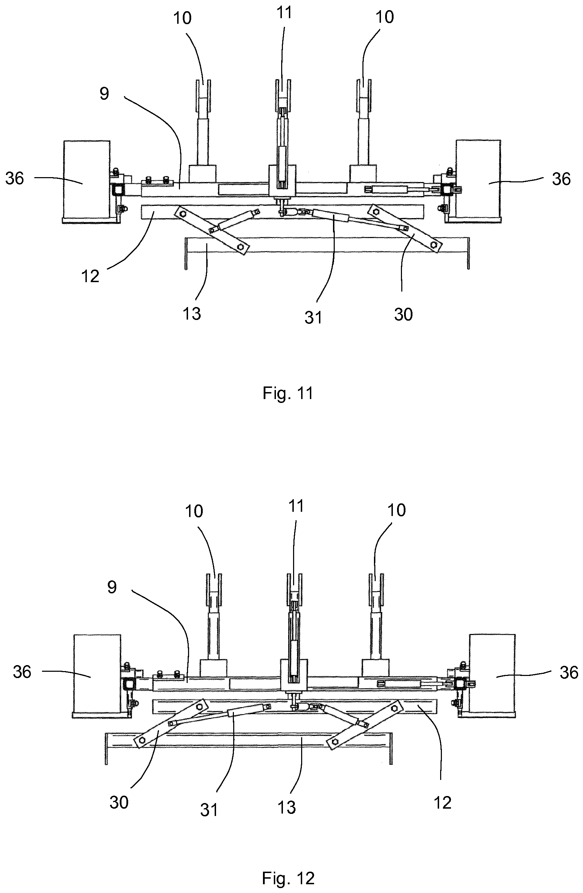

In Fig. 11 ist die Anbauvorrichtung nach Fig. 10 in der Draufsicht dargestellt, wobei auf die Wiedergabe der GPS-Antennen verzichtet wurde. Die Anbauvorrichtung ist in einem Zustand dargestellt, in dem der Anbaurahmen 9 in Fahrtrichtung gesehen nach rechts ausgelenkt ist. Beide Hydraulikzylinder zur Verschiebung des Anbaurahmens 13 sind als einfach wirkende Zylinder ausgestaltet. Die Auslenkung erfolgt dadurch, dass der rechte Hydraulikzylinder 31 ausfährt und dabei die rechte Strebe 30 nach außen bewegt. Der linke Hydraulikzylinder wird aufgrund der Parallelogramm-Struktur der Verschiebevorrichtung über die linke Strebe zusammengedrückt.

Fig. 12 zeigt dieselbe Anbauvorrichtung wie in Fig. 11, allerdings mit einer Auslenkung des Anbaurahmens 13 in Fahrtrichtung gesehen nach links. Der linke Hydraulikzylinder 31 ist ausgefahren, was zu einer Bewegung der linken Strebe 30 nach außen führt. Der rechte Hydraulikzylinder wird aufgrund der Parallelogramm-Struktur der Verschiebevorrichtung über die rechte Strebe zusammengedrückt.

Nicht dargestellt ist eine alternative Ausführungsform, bei der die beiden einfach wirkenden Hydraulikzylinder durch einen doppelt wirkenden Hydraulikzylinder ersetzt sind. In dem Fall muss der Zylinder sowohl bei der Verschiebung nach links als auch nach rechts aktiviert werden.

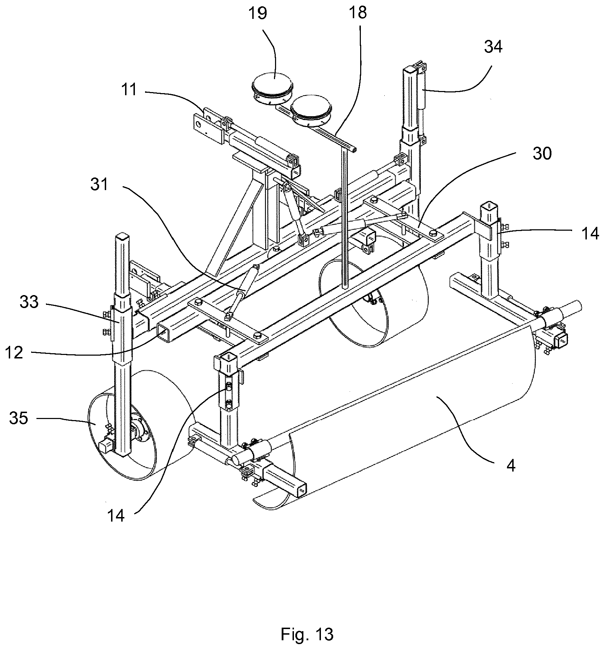

In Fig. 13 ist die Anbauvorrichtung gemäß Fig. 10 mit einem angekoppelten Arbeitsgerät 4 dargestellt. Das Arbeitsgerät ist ein gebogenes Schiebeblech zur Bodenbearbeitung, das über zwei T-förmige Vierkantprofile an den Befestigungselementen 14 des Anbaurahmens befestigt ist. In der Vertikalen ist das Arbeitsgerät 4 manuell verstellbar und beispielsweise durch Schraubverbindungen an den Befestigungselementen 14 fixiert. Bei einer entsprechenden Auswahl des Steuerungsmodus, der insbesondere eine Neigungskorrektur in Querrichtung umfasst, lassen sich mit diesem Arbeitsgerät auch in stark geneigten Seitenhängen waagerechte Fahrwege oder Terrassen quer zur Hangneigung anlegen. An den Vierkantprofilen zur Halterung des Arbeitsgerätes 4 sind auf jeder Seite Hydraulikzylinder als Aktoren angebracht, mittels derer die Ausrichtung des Arbeitsgerätes 4 in Bezug zur Längsachse beeinflusst werden kann. Dies ist insbesondere dann von Vorteil, wenn in einem Seitenhang Material abgetragen werden soll, da durch die Ausrichtung des Arbeitsgerätes in Bezug zur Längsachse beeinflusst werden kann, wie schnell bzw. welche Mengen an abgetragenem Material hangabwärts geleitet wird.

Weiterhin kann durch die Verstellbarkeit des Arbeitsgerätes in Längsrichtung über die Hydraulikzylinder eine Hin- und Rückfahrt auf demselben oder benachbarten Fahrweg oder Terrasse in einfacher Weise realisiert werden. Bei dem in Fig. 13 dargestellten Beispiel verläuft die Hangneigung nach rechts. Abgetragenes Material wird während der Fahrt nach rechts hangabwärts geschoben. Am Ende des Fahrweges oder der zu bearbeitenden Terrasse wird das Zugfahrzeug üblicherweise gewendet. Damit auch bei der Rückfahrt auf dem Fahrweg oder der Terrasse wiederum Material abgetragen und hangabwärts geschoben wird, können die Hydraulikzylinder betätigt werden, sodass das Schiebeblech am linken Holm nach hinten und am rechten Holm nach vorne verschoben wird, wodurch der Anstellwinkel des Schiebebleches verändert wird. Der Anstellwinkel kann dabei je nach Anforderung gewählt werden, beispielsweise als negativer Wert des Anstellwinkels der Hinfahrt oder ein anderer Wert, der für die örtlichen Gegebenheiten günstig ist.

Ein vergleichbares Ergebnis hinsichtlich der Hin- und Rückfahrt kann auch durch den Einsatz von Rechts- und Linksscharen und ihre entsprechende Verstellung anstelle des Schiebebleches erreicht werden.

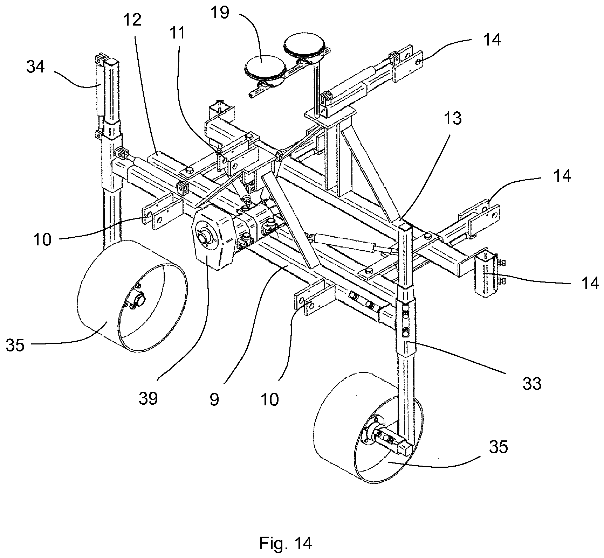

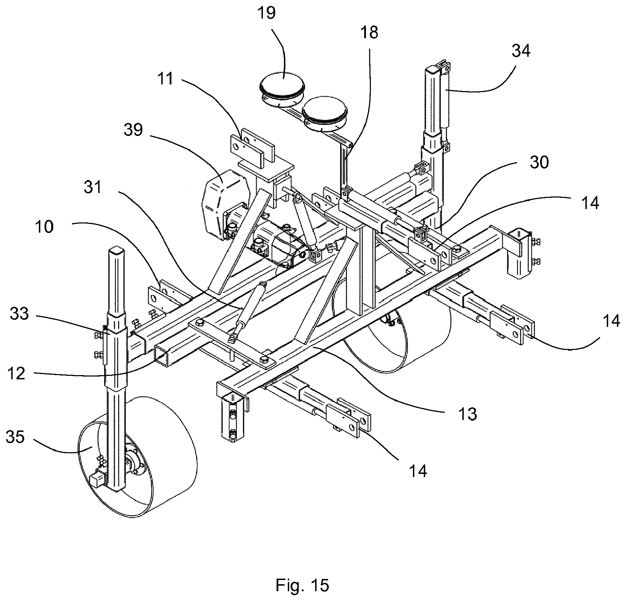

Fig. 14 zeigt eine vierte Ausführungsform der erfindungsgemäßen Anbauvorrichtung in perspektivischer Darstellung vom Zugfahrzeug aus betrachtet. In Fig. 15 ist dieselbe Ausführungsform in der Rückansicht vom Arbeitsgerät aus betrachtet dargestellt. Der Aufbau des Tragrahmens 9, Zwischenrahmens 12 und des Anbaurahmens 13 entspricht im Wesentlichen der dritten Ausführungsform gemäß Fig. 10. Allerdings sind bei dieser vierten Ausführungsform die Befestigungselemente 11, 10 des Tragrahmens 9 zur Kopplung der Anbauvorrichtung an das Zugfahrzeug starr ausgeführt. Im dargestellten Beispiel sind die Befestigungselemente 10, 11 als Doppelbleche mit Durchgangsbohrungen ausgeführt, in denen der Oberlenker und die Unterlenker mit einer Schraub- oder Steckverbindung befestigt werden können.

Damit die erfindungsgemäße Verstellbarkeit der Anbauvorrichtung in Längsrichtung gewährleistet ist, sind die Befestigungselemente 14 des Anbaurahmens 13 zur Kopplung der Anbauvorrichtung an das Arbeitsgerät längenverstellbar ausgeführt, in diesem Beispiel als Schiebetaschen. Die Schiebetaschen sind analog zur zweiten und dritten Ausführungsform an der Unterseite des Querholms des Tragrahmens 13 angebracht und mit einem Hydraulikzylinder als Aktor ausgestattet. In der Mitte des Querholmens des Anbaurahmens 13 erstreckt sich ein Träger senkrecht nach oben, der seitlich trapezförmige mit zwei Blechen abgestützt ist. Am oberen Ende des Trägers ist eine Plattform angebracht, auf der sowohl der Tragholm 18 zur Befestigung der GPS-Antennen als Einrichtungen zur Positionsbestimmung 19 als auch ein weiteres Befestigungselement 14 mit einem Hydraulikzylinder als Aktor angebracht.

Auf dem Querholm des Anbaurahmens ist ein Getriebeblock 39 angeordnet, der über eine Gelenkwelle (nicht dargestellt) mit der Zapfwelle des Zugfahrzeuges verbunden werden kann. Über das Getriebe werden zwei Ölpumpen angetrieben, die zwei unterschiedlichen Kreisläufen für Hydrauliköl zugeordnet sind. Am Anbaurahmen sind zur Versorgung der Ölkreisläufe zwei Öltanks angebracht, die in Fig. 14 und 15 nicht dargestellt sind. Weiterhin befindet sich hinter den beiden Ölpumpen an dem Getriebeblock noch ein Stromerzeuger, der ebenfalls von dem Getriebe angetrieben wird. Mit dem erzeugten Strom können die Elektronik-Einrichtungen versorgt werden, die in einem Gehäuse (nicht dargestellt) am Anbaurahmen untergebracht sind. Aufgrund der offenen Bauart der Anbauvorrichtung lassen sich Aggregate wie Getriebe, Ölpumpen, Stromerzeuger oder Gelenkzapfwellen auf einfache Weise austauschen. Zudem kann im Gegensatz zu Anbauvorrichtungen gemäß Stand der Technik die Ankopplung an das Zugfahrzeug einfach und gefahrlos durchgeführt werden.

### Liste der verwendeten Bezugszeichen

- 1: Zugfahrzeug
- 2: Unterlenker
- 3: Oberlenker
- 4: Arbeitsgerät
- 5: Arbeitspunkt
- 6: Soll-Linie
- 7: Fahrtrichtung
- 8: Hangneigung (hangabwärts)
- 9: Tragrahmen
- 10: Befestigungselement zur Kopplung des Tragrahmens an einen Unterlenker
- 11: Befestigungselement zur Kopplung des Tragrahmens an den Oberlenker
- 12: Zwischenrahmen
- 13: Anbaurahmen
- 14: Befestigungselement zur Kopplung des Anbaurahmens an das Arbeitsgerät
- 15: Verschieberichtung
- 16: Dreheinrichtung
- 17: Längsachse
- 18: Tragholm für Doppelantenne
- 19: Doppelantenne
- 20: Bodenoberfläche
- 21: Bleche des Zwischenrahmens
- 22: Untere Führungsschiene des Zwischenrahmens
- 23: Obere Führungsschiene des Zwischenrahmens
- 24: Unteres Winkelprofil des Anbaurahmens
- 25: Oberes Winkelprofil des Anbaurahmens
- 30: Streben zwischen Zwischenrahmen und Anbaurahmen
- 31: Aktor zur Verstellung der Streben 30
- 32: Aktor zur Verstellung der Drehvorrichtung
- 33: Halterung für Stützrad
- 34: Aktor der Halterung für Stützrad
- 35: Stützrad
- 37: Tank für Hydrauliköl
- 38: Gehäuse für Elektronik-Einrichtungen
- 39: Getriebeblock mit Hydraulikpumpe

## Patentansprüche

1. Anbauvorrichtung zur Kopplung eines landwirtschaftlichen Arbeitsgerätes (4) an ein Zugfahrzeug (1), das über einen Dreipunkt-Kraftheber mit einem Oberlenker (3) und zwei Unterlenkern (2) verfügt, umfassend einen Tragrahmen (9) mit Befestigungselementen (10, 11) zur Kopplung an den Oberlenker (3) und die Unterlenker (2), einen Anbaurahmen (13) mit Befestigungselementen (14) zur Kopplung an das Arbeitsgerät (4), sowie einen zwischen dem Tragrahmen (9) und dem Anbaurahmen (13) angeordneten Zwischenrahmen (12), der mittels einer Dreheinrichtung (16) relativ zum Tragrahmen (9) um die Längsachse (17) der Anbauvorrichtung verdrehbar ist und eine Verschiebevorrichtung aufweist, mittels derer der Anbaurahmen (13) quer zur Längsachse (17) relativ zum Zwischenrahmen (12) verschiebbar ist, **dadurch gekennzeichnet, dass** die Befestigungselemente (10, 11) des Tragrahmens (9) und/oder die Befestigungselemente (14) des Anbaurahmens (13) mittels ihnen zugeordneter Aktoren in ihrer Länge relativ zum Zugfahrzeug (1) und/oder relativ zum Arbeitsgerät (4) verstellbar sind, die Verschiebevorrichtung mindestens zwei in Form eines Parallelogramms drehbeweglich sowohl am Zwischenrahmen (12) als auch am Anbaurahmen (13) befestigte Streben (30) aufweist, und mindestens zwei Einrichtungen (19) zur Positionsbestimmung in Richtung der Längsachse (17) hintereinander in definierter Position an der Anbauvorrichtung und/oder dem Arbeitsgerät angebracht sind, wobei mindestens eine der Einrichtungen zur Positionsbestimmung (19) am Anbaurahmen (13) und/oder dem Arbeitsgerät (4) angebracht ist.

2. Anbauvorrichtung nach Anspruch 1, wobei der Zwischenrahmen (12) und der Anbaurahmen (13) jeweils einen Querholm umfassen, und die mindestens zwei Streben (30) als jeweils zwei parallele Flacheisen ausgeführt sind, von denen eines an der Oberseite der Querholme und eines an der Unterseite der Querholme drehbeweglich befestigt ist.

3. Anbauvorrichtung nach Anspruch 2, wobei der Zwischenrahmen (12) und der Anbaurahmen (13) jeweils einen zweiten Querholm umfassen, der in vertikaler Richtung über dem ersten Querholm angeordnet und fest mit diesem verbunden ist, und mindestens zwei wietere Streben (30) als jeweils zwei parallele Flacheisen ausgeführt sind, von denen eines an der Oberseite der zweiten Querholme und eines an der Unterseite der zweiten Querholme drehbeweglich befestigt ist.

4. Anbauvorrichtung zur Kopplung eines landwirtschaftlichen Arbeitsgerätes (4) an ein Zugfahrzeug (1), das über einen Dreipunkt-Kraftheber mit einem Oberlenker (3) und zwei Unterlenkern (2) verfügt, umfassend einen Tragrahmen (9) mit Befestigungselementen (10, 11) zur Kopplung an den Oberlenker (3) und die Unterlenker (2), einen Anbaurahmen (13) mit Befestigungselementen (14) zur Kopplung an das Arbeitsgerät (4), sowie einen zwischen dem Tragrahmen (9) und dem Anbaurahmen (13) angeordneten Zwischenrahmen (12), der mittels einer Dreheinrichtung (16) relativ zum Tragrahmen (9) um die Längsachse (17) der Anbauvorrichtung verdrehbar ist und eine Verschiebevorrichtung aufweist, mittels derer der Anbaurahmen (13) quer zur Längsachse (17) relativ zum Zwischenrahmen (12) verschiebbar ist, **dadurch gekennzeichnet, dass** die Befestigungselemente (10, 11) des Tragrahmens (9) und/oder die Befestigungselemente (14) des Anbaurahmens (13) mittels zugeordneter Aktoren in ihrer Länge relativ zum Zugfahrzeug (1) und/oder relativ zum Arbeitsgerät (4) verstellbar sind, der Tragrahmen (9), der Zwischenrahmen (12) und der Anbaurahmen (13) im Wesentlichen parallel zueinander angeordnet sind, und die Verschiebevorrichtung erste Eingriffselemente (22, 23) am Zwischenrahmen (12) umfasst, in denen zweite Eingriffselemente (25, 26) verschiebbar geführt sind, die am Anbaurahmen (13) befestigt sind, und mindestens zwei Einrichtungen (19) zur Positionsbestimmung in Richtung der Längsachse (17) hintereinander in definierter Position an der Anbauvorrichtung und/oder dem Arbeitsgerät angebracht sind, wobei mindestens eine der Einrichtungen zur Positionsbestimmung (19) am Anbaurahmen (13) und/oder dem Arbeitsgerät (4) angebracht ist.

5. Anbauvorrichtung nach einem der Ansprüche 1 bis 4, wobei die Einrichtungen (19) zur Positionsbestimmung als Antennen, vorzugsweise als GPS-Antennen ausgestaltet sind.

6. Anbauvorrichtung nach einem der Ansprüche 1 bis 5, wobei die Anbauvorrichtung mindestens einen Neigungssensor aufweist, der eingerichtet ist, die Neigung der Anbauvorrichtung und/oder des Arbeitsgerätes (4) gegenüber ihrer bzw. seiner vertikalen Achse zu erfassen.

7. Anbauvorrichtung nach einem der Ansprüche 1 bis 6, wobei auf beiden Seiten des Tragrahmens (9), des Zwischenrahmens (12) und/oder des Anbaurahmens (13) Stützräder (35) an Halterungen (33, 34) befestigt sind, die in seitlicher Richtung quer zur Längsachse und/ oder in vertikaler Richtung verstellbar sind.

8. Steuerungseinrichtung für eine Anbauvorrichtung nach einem der Ansprüche 1 bis 7, umfassend Mittel zur Verarbeitung der von den Einrichtungen zur Positionsbestimmung bereitgestellten Signale in kartografische Ist-Positionsinformationen, eine Speichereinheit zur Speicherung von Soll-Positionsinformationen für den Arbeitspunkt des Arbeitsgerätes, eine Recheneinheit mit einem Steuerungsprogramm zur Berechnung von Steuerungssignalen für die Aktoren der Befestigungselemente (10, 11, 14) des Tragrahmens (9) und/ oder des Anbaurahmens (13), der Verschiebevorrichtung und/oder der Dreheinrichtung (16) oder gegebenenfalls der Halterungen (33, 34) für die Stützräder (35), sowie eine Ausgabeeinheit für die Steuerungssignale, **dadurch gekennzeichnet, dass** die Recheneinheit derart eingerichtet ist, dass ausgehend von den Ist-Positionsinformationen und den Soll-Positionsinformationen in Abhängigkeit von einem vorgegebenen Steuerungsmodus die Steuerungssignale derart berechnet werden, dass durch Betätigen der Aktoren durch die Steuerungssignale der Arbeitspunkt des Arbeitsgerätes auf die Soll-Position hin bewegbar ist.

9. Steuerungseinrichtung nach Anspruch 8 für eine Anbauvorrichtung, die mindestens einen Neigungssensor aufweist, wobei die Steuerungseinrichtung weiterhin Mittel zur Verarbeitung der von dem mindestens einen Neigungssensor bereitgestellten Signale in Ist-Neigungsinformationen des Anbaurahmens und/oder des Arbeitsgerätes umfasst, und wobei die Recheneinheit derart eingerichtet ist, dass vor oder bei der Berechnung der Steuerungssignale für die Aktoren ausgehend von den Ist-Positionsinformationen unter Berücksichtigung der Ist-Neigungsinformationen der tatsächliche Arbeitspunkt des Arbeitsgerätes berechnet wird.

10. Steuerungsverfahren für eine Anbauvorrichtung nach einem der Ansprüche 1 bis 7, umfassend die Schritte:
- Verarbeitung der von den Einrichtungen zur Positionsbestimmung bereitgestellten Signale in kartografische Ist-Positionsinformationen,
- Berechnung von Steuerungssignalen für die Aktoren der Befestigungselemente (10, 11, 14) des Tragrahmens (9) und/oder des Anbaurahmens (13), der Verschiebevorrichtung und/oder der Dreheinrichtung (16) oder gegebenenfalls der Halterungen (33, 34) für die Stützräder (35) ausgehend von den Ist-Positionsinformationen und vorgegebenen Soll-Positionsinformationen in Abhängigkeit von einem vorgegebenen Steuerungsmodus, sodass durch Betätigen der Aktoren durch die Steuerungssignale der Arbeitspunkt des Arbeitsgerätes auf die Soll-Position hin bewegt wird, und
- Ausgabe der Steuerungssignale an die Aktoren der Befestigungselemente (10, 11, 14) des Tragrahmens (9) und/oder des Anbaurahmens (13), der Verschiebevorrichtung und/oder der Dreheinrichtung (16) oder gegebenenfalls der Halterungen (33, 34) für die Stützräder (35).

11. Steuerungsverfahren nach Anspruch 10 für eine Anbauvorrichtung, die mindestens einen Neigungssensor aufweist, wobei als weiterer Schritt die von dem mindestens einen Neigungssensor bereitgestellten Signale in Ist-Neigungsinformationen des Anbaurahmens und/oder des Arbeitsgerätes verarbeitet werden, und gemäß eines ersten Steuerungsmodus vor oder bei der Berechnung der Steuerungssignale für die Aktoren ausgehend von den Ist-Positionsinformationen unter Berücksichtigung der Ist-Neigungsinformationen der tatsächliche Arbeitspunkt des Arbeitsgerätes berechnet wird.

12. Steuerungsverfahren nach Anspruch 11, wobei gemäß eines zweiten Steuerungsmodus zur Korrektur der Längsneigung des Arbeitsgerätes die Steuerungssignale für die Aktoren zur Verstellung der Befestigungselemente (10, 11, 14) des Tragrahmens (9) und/oder des Anbaurahmens (13) in ihrer Länge relativ zum Oberlenker (3) und/oder zu den Unterlenkern (2) und/oder relativ zum Arbeitsgerät (4) ausgehend von den Ist-Neigungsinformationen sowie vorgegebenen Soll-Neigungsinformationen in Längsrichtung berechnet werden.

13. Steuerungsverfahren nach Anspruch 11 oder 12, wobei gemäß eines dritten Steuerungsmodus zur Korrektur der Querneigung des Arbeitsgerätes die Steuerungssignale für den Aktor oder die Aktoren der Dreheinrichtung (16) zur Verdrehung des Zwischenrahmens (12) relativ zum Tragrahmen (9) um die Längsachse der Anbauvorrichtung ausgehend von den Ist-Neigungsinformationen sowie vorgegebenen Soll-Neigungsinformationen in Querrichtung berechnet werden.

14. Steuerungsverfahren nach einem der Ansprüche 11 bis 13, wobei gemäß eines vierten Steuerungsmodus zur rechtwinkligen Ausrichtung des Arbeitsgerätes die Steuerungssignale für die Aktoren zur Verstellung der Befestigungselemente (10, 11, 14) des Tragrahmens (9) und/oder des Anbaurahmens (13) in ihrer Länge relativ zum Oberlenker (3) und/oder zu den Unterlenkern (2) und/oder relativ zum Arbeitsgerät (4) derart berechnet werden, dass sich nach Durchführung der Beeinflussung der Aktoren die beiden Einrichtungen zur Positionsbestimmung in einer vorgegebenen Soll-Lage bezogen auf eine vorgegebene Soll-Linie (6) befinden.

15. Steuerungsverfahren nach einem der Ansprüche 11 bis 14 für eine Anbauvorrichtung, bei der die Verschiebevorrichtung mindestens zwei in Form eines Parallelogramms drehbeweglich sowohl am Zwischenrahmen (12) als auch am Anbaurahmen (13) befestigte Streben (30) und mindestens einen Aktor (31) umfasst, der drehbeweglich mit einer Strebe (30) und dem Zwischenrahmen (12) oder mit einer Strebe (30) und dem Anbaurahmen (13) verbunden ist, wobei bei der Berechnung der Steuerungssignale für die Aktoren zur Verstellung der Befestigungselemente (10, 11, 14) des Tragrahmens (9) und/oder des Anbaurahmens (13) die durch die kreisbahnförmige seitliche Verschiebung des Anbaurahmens (13) bedingte Verlagerung des Arbeitspunktes in Längsrichtung korrigierend berücksichtigt wird.
